(19) Europäisches Patentamt
European Patent Office
Office européen des brevets

(11) **EP 3 123 238 B1**

(12) **EUROPÄISCHE PATENTSCHRIFT**

(45) Veröffentlichungstag und Bekanntmachung des Hinweises auf die Patenterteilung:
**01.05.2024  Patentblatt 2024/18**

(21) Anmeldenummer: **15714413.0**

(22) Anmeldetag: **19.03.2015**

(51) Internationale Patentklassifikation (IPC):
**G02C 7/06** (2006.01)　　　**G02C 7/04** (2006.01)
**G02C 7/02** (2006.01)

(52) Gemeinsame Patentklassifikation (CPC):
**G02C 7/061; G02C 7/028;** G02C 2202/12;
G02C 2202/20

(86) Internationale Anmeldenummer:
**PCT/EP2015/000604**

(87) Internationale Veröffentlichungsnummer:
**WO 2015/144299 (01.10.2015 Gazette 2015/39)**

(54) **VERBESSERTE OPHTHALMISCHE LINSE ZUR PRESBYOPIE-KORREKTION**

IMPROVED OPHTHALMIC LENS FOR PRESBIOPIA CORRECTION

LENTILLE OPHTALMIQUE AMÉLIORÉE POUR LA CORRECTION DE LA PRESBYOPIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2014  DE 102014004381**

(43) Veröffentlichungstag der Anmeldung:
**01.02.2017  Patentblatt 2017/05**

(73) Patentinhaber: **Rodenstock GmbH
80687 München (DE)**

(72) Erfinder:
• **MUSCHIELOK, Adam
81369 München (DE)**
• **BECKEN, Wolfgang
82061 Neuried (DE)**
• **ALTHEIMER, Helmut
87650 Baisweil-Lauchdorf (DE)**
• **ESSER, Gregor
80686 München (DE)**
• **WEHNER, Edda
82275 Emmering (DE)**

(74) Vertreter: **Müller-Boré & Partner
Patentanwälte PartG mbB
Friedenheimer Brücke 21
80639 München (DE)**

(56) Entgegenhaltungen:
**EP-A1- 1 891 912　　EP-A1- 2 649 487
WO-A1-2011/075668　　JP-A- 2009 069 462
US-A1- 2006 055 883　　US-A1- 2008 273 169
US-A1- 2010 238 400　　US-A1- 2013 201 445
US-A1- 2013 261 782　　US-B1- 7 073 906**

**Beschreibung**

Die Erfindung betrifft progressive Brillenlinsen zur Presbyopiekorrektur und Verfahren zum Optimieren und Herstellen progressiver Brillenlinsen zur Presbyopiekorrektur.

Ophthalmische Linsen zur Presbyopiekorrektur umfassen multifokale Kontaktlinsen und Brillengläser, wie z.B. Bifokalgläser, Multifokalgläser oder Gleitsichtgläser. Jedes dieser Korrektionsmittel besitzt dabei eine Reihe von Vor- und Nachteilen.

Bifokalgläser und Trifokalgläser bilden in zwei (Bifokalgläser) oder drei (Trifokalgläser) Objektabständen scharf und kontrastreich ab. Solche Gläser besitzen zwei oder drei Blickbereiche (Fern- und Nahblickbereich bei Bifokalgläsern, und Fern-, Zwischen- und Nahblickbereich bei Trifokalgläsern), in denen jeweils Objekte in einer einzigen Entfernung scharf abgebildet werden können. Durch Blickbewegungen kann der Träger einer Bi- bzw. Trifokalbrille einen der Hauptblickbereiche wählen. Bifokal- und Trifokalgläser besitzen jedoch den Nachteil, dass sie nicht für alle Objektabstände scharfe Abbildungen ermöglichen. Ein weiterer Nachteil ist der von vielen als unästhetisch empfundene auffällige prismatische Sprung, der an den Grenzen der Blickbereiche dadurch entsteht, dass die Krümmungen der Glasoberfläche nicht überall kontinuierlich ineinander überführt werden können.

Multifokale Kontaktlinsen besitzen zwar den Vorteil, unabhängig von der Blickrichtung bei mehreren Objektabständen gleichzeitig eine scharfe Abbildung zu ermöglichen, der Kontrast dieser Abbildungen ist jedoch ebenfalls bei allen Blickrichtungen geschwächt, da die Intensität des einfallenden Lichts auf mehrere Brennweiten verteilt werden muss. Die Kontrastminderung kommt primär durch unscharfe Abbildungen zustande, die gleichzeitig mit dem scharfen Bild eines Objekts wahrgenommen werden. Wird zur Erzeugung der verschiedenen Brennweiten eine diffraktive Struktur verwendet, so kann zusätzlich diffus durch die diffraktive Struktur gestreutes Licht zu einer weiteren Kontrastabnahme führen und es kann ein Farblängsfehler erzeugt werden. Die permanente Wahrnehmung eines Bildes mit geringem Kontrast kann von dem Träger von multifokalen Kontaktlinsen als störend oder anstrengend empfunden werden und ist ein Nachteil von multifokalen Kontaktlinsen.

Gleitsichtgläser besitzen eine oder mehrere kontinuierliche progressive brechende Flächen, die in den Hauptblickbereichen (Fern-, Zwischen- und Nahblickbereich) eine scharfe und kontrastreiche Abbildung ermöglichen. Dabei werden Objekte in jeweils einer einzigen Entfernung scharf abgebildet, die Entfernung ist jedoch abhängig von der Durchblickstelle bzw. Blickrichtung. Der Träger einer Gleitsichtbrille kann durch Senkung des Blickes kontinuierlich den Objektabstand von scharf dargestellten Objekten einstellen. Gleitsichtgläser weisen ferner keine unästhetischen Übergänge der Brechkraft auf. Durch den kontinuierlichen Anstieg der Wirkung in einem Gleitsichtglas, und damit verbunden auch durch eine kontinuierliche Objektabstandsfunktion, entsteht jedoch unweigerlich ein peripherer Astigmatismus abseits der Hauptblickbereiche. Dieser periphere Astigmatismus verringert die Sehschärfe beim Blick abseits der Hauptblickbereiche und führt zu Verzeichnungen, die beim Tragen einer Gleitsichtbrille zu Unverträglichkeiten führen können. Der periphere Astigmatismus ist deshalb ein großer Nachteil der Gleitsichtbrille.

In EP 0 967 509 B1 wird vorgeschlagen, durch Kombination von diffraktiven und refraktiven Brechkräften in einem Brillenglas drei unterschiedliche Brechkraftverläufe zwischen dem Fern- und dem Nahteil zu realisieren. Jeder dieser Brechkraftverläufe für sich erzeugt jedoch unweigerlich periphere Unschärfebereiche, wie dies auch bei einem konventionellen Gleitsichtglas der Fall ist.

In EP 2 175 306 B1 und EP 2 175 307 A1 sind ophthalmische Gläser beschrieben, die im selben Durchblickpunkt scharfes Sehen bei zwei verschiedenen Objektabständen erlauben, was durch eine Aufteilung des Glases in viele einander abwechselnde Brechkraftbereiche angestrebt wird. Es wird damit jedoch nicht der periphere Astigmatismus eines Gleitsichtglases eliminiert, da es für zumindest eine der Objektabstandsfunktionen einen kontinuierlichen Übergang der Brechkraft innerhalb eines der Brechkraftbereiche gibt. Des Weiteren führen Diskontinuitäten an den Grenzen der Brechkraftbereiche unweigerlich zu Streulicht, das den Seheindruck beeinträchtigt. Auch EP 2 649 487 B1 ist Teil der Stand der Technik.

EP 2 171 526 A4 zeigt eine Gleitsichtlinse, die über eine zusätzliche diffraktive Struktur im Nahblickbereich verfügt. Die diffraktive Struktur reduziert zwar etwas den im Glas vorhandenen Astigmatismus, dieser wird jedoch nicht eliminiert. Zudem verschlechtert die diffraktive Struktur die Sehqualität im Nahblickbereich, da Streulicht, chromatische Aberration und Nebenbilder auftreten. Letztere sind durch in der 0-ten Beugungsordnung verbliebene Restintensität des durch die Linse tretenden Lichts bedingt. Chromatische Aberration und Nebenbilder können sich vor allem bei Seheindrücken mit hohem Kontrast als störend erweisen, wie z.B. beim Lesen oder beim Betrachten von hellen Gegenständen.

US 2008/0273169 beschreibt eine progressive Brillenlinse mit einem Bereich diffraktiver Brechkraft und einem progressiven Brechkraftbereich. Durch eine Kombination der Designparameter jeder der beiden Bereiche, wie z.B. Anordnung, Brechkraft, Form und Größe, kann eine progressive Linse erzielt werden, die niedrigeren Astigmatismus, niedrigere Verzeichnung, breiteren Progressionskanal und kürzere Progressionslänge als herkömmliche refraktive progressive Linsen aufweist.

US 7 037 906 B1 beschreibt eine Kontaktlinse oder intraokulare Linse mit zumindest einer bifokalen diffraktiven Struktur, die ringförmig um einen zentralen asphärischen refraktiven Bereich angeordnet ist. WO 2011/075668 A1 beschreibt eine intraokulare Linse mit zumindest einem rotationsasymmetrischen und/oder nicht kontinuierlichen diffraktiven Bereich.

JP 2009/069462 A beschreibt eine progressive Brillenlinse mit einer diffraktiven Struktur in den Bereichen erhöhten Astigmatismus auf den beiden Seiten der progressiven Zone. Die diffraktive Struktur weist unterschiedliche Gitterabstände in senkrechter und horizontaler Richtung auf.

Bei allen ophthalmischen Linsen, vor allem jedoch bei den Brillengläsern wie sie oben beispielhaft erwähnt wurden, tritt eine chromatische Aberration, d.h. Farbquerfehler (transversale chromatische Aberration) sowie Farblängsfehler (longitudinale chromatische Aberration), auf, die sich z.B. in Farbsäumen äußert. Die Farbsäume treten dabei verstärkt in der Peripherie der ophthalmischen Linsen auf und können vor allem bei hohen Plus- oder Minuswirkungen zu einer Verschlechterung des Seheindruckes führen.

Aufgabe der vorliegenden Erfindung ist es, den Seheindruck durch eine ophthalmische Linse und insbesondere durch eine progressive Brillenlinse zur Presbyopiekorrektur zu verbessern.

Insbesondere ist es eine Teilaufgabe der Erfindung, eine kontinuierliche Überführung der Brechkraft innerhalb der ophthalmischen Linse zu erreichen, und dabei gleichzeitig unästhetische prismatische Übergänge zu vermeiden oder zu kaschieren. Eine weitere Teilaufgabe ist es, die Ausprägungsstärke und/oder die Größe der Fläche ungewollter peripherer Unschärfebereiche für mindestens eine Lichtwellenlänge und Objektentfernung zu vermeiden oder zu verringern. Eine weitere Teilaufgabe ist es, die chromatische Aberration, welche bei einer rein diffraktiven oder rein refraktiven ophthalmischen Linse vorhanden ist, zu verringern. Unter dem Begriff chromatischer Aberration wird die transversale und/oder longitudinale chromatische Aberration verstanden. Vor allem die transversale chromatische Aberration führt beim Blick durch eine ophthalmische Linse zu Farbsäumen und damit zu einer Verschlechterung des Seheindrucks, sodass eine Verringerung der chromatischen Aberration für einen optimalen Seheindruck wichtig ist. Mit dem Erfüllen zumindest einer der Teilaufgaben wird der Tragekomfort und die Sehqualität beim Blick durch eine ophthalmische Linse verbessert und die Wahrscheinlichkeit von Unverträglichkeiten verringert.

Die obigen Aufgaben werden durch die Kombination einer geeigneten Verteilung der Brechkraft der brechenden Flächen (refraktiver Brechkraftanteil) mit mindestens einer geeignet gestalteten diffraktiven Struktur, die zur Brechkraft der ophthalmischen Linse beträgt, gelöst.

Gemäß einem ersten Aspekt der Erfindung wird eine ophthalmische Linse zur Presbyopiekorrektur mit zumindest einer diffraktiven Struktur bereitgestellt. Die diffraktive Struktur weist zumindest einen Bereich variabler Beugungseffizienz auf, in welchem die Beugungseffizienz zumindest einer zur Brechkraft der Linse beitragenden Beugungsordnung der diffraktiven Struktur räumlich variabel ist, d.h. in Abhängigkeit von dem Durchblickpunkt auf der ophthalmischen Linse variiert. Die Beugungseffizienz der zumindest einen Beugungsordnung kann insbesondere so gewählt werden, dass das Objektabstandsmodell eine Relation ist, d.h. dass einem Durchblickpunkt mehrere Objektvergenzen zugeordnet werden können, sodass bei mindestens einem Objektabstand eine scharfe Abbildung bzw. scharfes Sehen möglich ist.

Die ophthalmische Linse zur Presbyopiekorrektur ist ein progressives Brillenglas (eine progressive Brillenlinse), bei welchem sich die refraktive Brechkraft (d.h. der refraktive Anteil der Brechkraft der Linse) kontinuierlich entlang einer Verbindungslinie zwischen einem Fern- und einem Nahbezugspunkt ändert.

Die diffraktive Struktur kann zusätzlich zumindest einen Bereich variabler diffraktiver Brechkraft aufweisen, in welchem die Brechkraft zumindest einer Beugungsordnung der diffraktiven Struktur räumlich variabel ist, d.h. in Abhängigkeit von dem Durchblickpunkt auf der ophthalmischen Linse variiert. Die Gesamtbrechkraft der Linse in diesem Bereich kann dabei ebenfalls räumlich variabel oder im Wesentlichen konstant sein. Der Bereich variabler Beugungseffizienz oder der Bereich variabler diffraktiver Brechkraft können zumindest teilweise oder vollständig überlappen.

Die Kombination einer refraktiven Struktur mit einer diffraktiven Struktur mit variabler Beugungseffizienz und gegebenenfalls Brechkraft bietet bei der Gestaltung von ophthalmischen Linsen zur Presbyopiekorrektur weitere Freiheitsgrade, die zur Verbesserung von Seheigenschaften von ophthalmischen Linsen benutzt werden können. So ist es mit der ophthalmischen Linse gemäß dem ersten Aspekt der Erfindung möglich, Abbildungsfehler (wie z.B. ungewollter Astigmatismus, prismatische Unstetigkeiten, etc.) und/oder chromatische Fehler der ophthalmischen Linse zu reduzieren. Insbesondere ist es möglich, die bei progressiven Brillengläsern peripher auftretenden ungewollten Astigmatismen des refraktiven Brechkraftanteils zumindest teilweise zu kompensieren (z.B. 0,2 dpt in mindestens einer Beugungsordnung).

Die Variation der Beugungseffizienz und/oder der Brechkraft kann stetig oder unstetig sein. Vorzugsweise ist die Variation der Beugungseffizienz und/oder der diffraktiven Brechkraft stetig.

Die diffraktive Struktur kann ein Beugungsgitter (z.B. ein Amplituden- und/oder Phasengitter), insbesondere ein Sägezahn- oder Blazegitter, ein Transmissionsgitter oder holographisches Gitter sein oder ein solches Beugungsgitter umfassen. Die diffraktive Struktur kann ebenfalls ein diffraktives Gitter sein oder umfassen, welches durch eine Schicht bzw. Folie mit variierendem Brechungsindex (Gradient Index Material) realisiert wird. Das diffraktive Gitter kann sowohl ein fein strukturiertes diffraktives Gitter als auch ein grob strukturiertes diffraktives Gitter (wie z.B. MOD=Multi-Order-Diffraction Gitter) sein. Eine oder mehrere der refraktiven Flächen der ophthalmischen Linse können diffraktive Strukturen aufweisen. So kann die zumindest eine diffraktive Struktur auf oder in der Vorder- und/oder der Rückfläche der ophthalmischen Linse angeordnet bzw. angebracht sein. Es ist ferner möglich, ein Compoundsystem vorzusehen, welches aus einem Grundglas und einem Deckglas aufgebaut ist, wobei die zumindest eine diffraktive Struktur auf den geschützten Innenseiten des Grundglases und/oder des Deckglases (d.h. die sich gegenüber stehenden Seiten des Grund- und des Deckglases) aufgebracht ist.

Wahlweise können die Materialien, welche das diffraktive Gitter begrenzen bzw. bilden, statisch oder z.B. elektrisch schaltbar sein. Verfahren zum Herstellen von statischen oder schaltbaren diffraktiven Gittern sind aus dem Stand der Technik bekannt.

Die ophthalmische Linse zur Presbyopiekorrektur (die progressive Brillenlinse) umfasst zumindest zwei Bereiche unterschiedlicher Brechkraft, die jeweils zum Sehen in unterschiedlichen Entfernungen ausgelegt sind. Die ophthalmische Linse kann eine Linse mit gekrümmten brechenden Flächen oder eine Gradientenindexlinse sein. Bei einer progressiven Linse kann der Verlauf der Brechkraft beliebig sein und von dem Anwendungszweck der Linse (z.B. hauptsächlich zum Sehen in die Ferne, in die Nähe, in mittleren Entfernungen) und/oder dem Designkonzept (weiches Design, hartes Design, etc.) abhängen.

Brechungseigenschaften einer ophthalmischen Linse, die auf die Lichtbrechung zwischen Medien unterschiedlicher Brechungsindices zurückzuführen sind werden üblicherweise mit einer Änderung von Sphäre, Zylinder und/oder Achse beschrieben. Bei der Sphäre, Zylinder und Achse kann es sich um Flächeneigenschaften oder um Eigenschaften in Gebrauchsstellung der ophthalmischen Linse handeln. Die Sphäre, Zylinder und/oder Achse kann/können in Abhängigkeit vom Durchblickpunkt variieren. Ferner kann/können sich die Sphäre, Zylinder und/oder Achse in Abhängigkeit von der Gebrauchsstellung, in der die Linse verwendet wird, ändern. Vorzugsweise ändert sich zumindest die Sphäre bzw. der sphärische Äquivalent in Abhängigkeit vom Durchblickpunkt und gegebenenfalls der Gebrauchsstellung der Linse. Die (rein) refraktive Brechkraft einer ophthalmischen Linse, welche sich aus Sphäre, Zylinder und/oder Achse zusammensetzt, kann mittels eines Brechkraftvektors mit den Komponenten $M\_ref$, $J0\_ref$ und $J45\_ref$ beschrieben werden, wobei $M\_ref$ den sphärischen Äquivalent, und $J0\_ref$ und $J45\_ref$ die astigmatischen Komponenten bezeichnen.

Betrachtet man die Brechkraft der n-ten Beugungsordnung der diffraktiven Struktur, d.h. den diffraktiven Brechkraftanteil, der durch Beugung des Lichts in die $n$-te Ordnung beim Durchgang durch die diffraktive Struktur entsteht, so kann man sie äquivalent zu refraktiven ophthalmischen Linsen mit einem sphärischen Äquivalent $M\_n\_diff,$ sowie mit zwei astigmatischen Komponenten $J0\_n\_diff$ und $J45\_n\_diff$ beschreiben. Im Allgemeinen steht "$n$" für eine beliebige Beugungsordnung einer diffraktiven Struktur. Im Grenzfall eines 1-dimensionalen Gitters kann "$n$" als eine ganze Zahl dargestellt werden, bei 2-dimensionalen diffraktiven Elementen kann "$n$" als ein Tupel zweier ganzer Zahlen dargestellt werden. Der Anteil des einfallenden Lichts, der an der diffraktiven Struktur in die $n$-te Ordnung gebeugt wird, wird dabei durch die Beugungseffizienz $eta\_n$ beschrieben.

In jedem Punkt einer ophthalmischen Linse mit einer diffraktiven Struktur setzt sich die gesamte Brechkraft der Linse für das in eine bestimmte Beugungsordnung gebeugte Licht aus den Brechkraftbeiträgen der brechenden Flächen (refraktive Brechkraft) und dem Brechkraftbeitrag der diffraktiven Struktur (diffraktive Brechkraft) zusammen. Gemäß einem Aspekt der Erfindung können die Beugungseffizienz und/oder die Brechkraft zumindest einer n-ten Beugungsordnung der diffraktiven Struktur abhängig vom Durchblickpunkt durch die diffraktive Struktur gesteuert werden. Dabei können die Beugungseffizienz und die Brechkraft weitgehend unabhängig voneinander gesteuert bzw. variiert werden.

Der Brechkraftanteil bzw. die Brechkraft der $n$-ten Beugungsordnung der diffraktiven Struktur ($M\_n\_diff, J0\_n\_diff, J45\_n\_diff$) kann dabei über die gesamte diffraktive Struktur oder nur über Teile der diffraktiven Struktur konstant sein oder in Abhängigkeit vom Durchblickpunkt variieren, wobei eine solche Variation sowohl stetig als auch unstetig sein kann.

Der diffraktive Brechkraftanteil bzw. die Brechkraft einer Beugungsordnung kann durch eine geeignete Änderung der Periodizität der diffraktiven Struktur in Abhängigkeit vom Durchblickpunkt variiert werden. Erfolgt die Änderung der Periodizität des Gitters ausgehend von einem Durchblickpunkt in alle Richtungen in gleich starkem Ausmaß, so wird eine sphärische Brechkraft erzeugt. Wird das diffraktive Gitter mittels einer Phasenfunktion beschrieben (vgl. z.B. die in der Druckschrift WO 2012/065738 eingeführte Phasenfunktion), so weist die Phasenfunktion in diesem Fall an jeder Stelle gleiche Krümmungen auf. In diesem Fall ist der Brechkraftbeitrag der diffraktiven Struktur zur Gesamtbrechkraft der ophthalmischen Linse konstant. Erfolgt die Änderung der Periodizität des Gitters ausgehend von einem Durchblickpunkt in zwei unterschiedliche Richtungen in unterschiedlich starkem Ausmaß, so kann ein zusätzlicher astigmatischer Brechkraftbeitrag erzeugt werden, wobei auch die Lage der Achse des so erzeugten Astigmatismus gesteuert bzw. variiert werden kann. Durch eine Änderung der lokalen Periodizität des diffraktiven Gitters, kann eine beliebige gewünschte Änderung des Brechkraftbeitrags der diffraktiven Struktur erzielt werden, um die Brechungseigenschaften einer ophthalmischen Linse mit diffraktiven Strukturen gezielt zu manipulieren.

Die Beugungseffizienz des durch die diffraktive Struktur in eine Beugungsordnung gebeugten Lichts kann durch geeignete Gestaltung der diffraktiven Struktur weitestgehend unabhängig von ihrem Brechkraftverlauf gesteuert werden, wobei lediglich die Summe der Intensitäten der in alle Beugungsordnungen gebeugten Lichts zusammen mit den Streuverlusten die Intensität des einfallenden Lichts ergibt. Die Beugungseffizienz kann z.B. durch sogenannte Blazing beeinflusst werden. So kann als diffraktive Struktur ein so genanntes Sägezahn- oder Blazegitter eingesetzt werden, d.h. ein Gitter mit einem Sägezahn-ähnlichen Profil. Durch eine Variation des Winkels zwischen der Blazefläche und dem Substrat (d.h. des Blazewinkels) kann der Anteil des Lichts in einer bestimmten Beugungsordnung, d.h. die Beugungseffizienz für eine bestimmte Beugungsordnung variiert werden.

Eine weitere Möglichkeit, die Beugungseffizienz zu beeinflussen, ist, den Brechungsindex-Unterschied zwischen den beiden Medien, die die diffraktive Struktur ausbilden, mit der Durchblickstelle zu variieren. Beispielsweise kann der Brechungsindex des Grundmaterials, aus dem die ophthalmische Linse gefertigt ist, einen Brechungsindexgradienten aufweisen. Ebenso kann auch ein Lack oder eine Beschichtung, mit dem bzw. der das Grundmaterial beschichtet ist, einen Brechungsindexgradienten aufweisen. Ein solcher Lack bzw. eine solche Schicht kann z.B. aus Flüssigkristallen, welche zusätzlich polymerisiert sein können, bestehen oder Flüssigkristalle umfassen. Solche polymerisierten Flüssigkristallschichten werden z.B. in der Herstellung von Phasenplatten benutzt.

Die Beugungseffizienz kann dabei über die gesamte diffraktive Struktur oder nur über Teile der diffraktiven Struktur konstant sein, oder in Abhängigkeit vom Durchblickpunkt variieren, wobei die Variation sowohl stetig als auch unstetig sein kann.

Wie bereits oben ausgeführt, bietet die Kombination einer refraktiven Struktur (umfassend gekrümmte brechende Flächen und/oder einen Brechungsindexgradienten) mit einer diffraktiven Struktur mit variabler Beugungseffizienz und/oder Brechkraft bei der Gestaltung von ophthalmischen Linsen zur Presbyopiekorrektur entscheidende Vorteile. Während an einer refraktiven Fläche der größte Teil des Lichts vollständig gebrochen wird und lediglich ein kleiner Teil durch Reflexionsverluste verloren geht, bietet eine diffraktive Struktur durch die Beugungseffizienz und/oder die diffraktive Brechkraft einer oder mehrerer Beugungsordnungen weitere Freiheitsgrade, die zur Verbesserung von Seheigenschaften von ophthalmischen Linsen benutzt werden können.

Die diffraktive Struktur ist so gestaltet, dass sich die Beugungseffizienz und optional auch die Brechkraft der zumindest einen Beugungsordnung der diffraktiven Struktur stetig bzw. kontinuierlich entlang einer Linie, welche einen ersten Referenzpunkt mit einem zweiten Referenzpunkt der Linse verbindet, ändert. Die Beugungseffizienz der zumindest einen Beugungsordnung kann zum Beispiel im ersten Referenzpunkt einen ersten hohen Wert (z.B. im Wesentlichen 100%) aufweisen, und bei stetiger Änderung entlang der die beiden Referenzpunkten verbindenden Linie, kontinuierlich auf einen niedrigeren Wert (z.B. im Wesentlichen 0%) abfallen. Ist die ophthalmische Linse eine progressive Linse, kann diese zumindest eine Verbindungslinie zwischen dem Fern- und dem Nahbezugspunkt aufweisen, entlang derer sich die Beugungseffizienz mindestens einer Beugungsordnung kontinuierlich ändert.

Mit einer solchen diffraktiven Struktur lässt sich ein neuartiger Übergang der Brechkraft zwischen zwei Durchblickpunkten bzw. zwischen zwei Gebieten mit unterschiedlichen Brechkraftvektoren verwirklichen, der z.B. bei der Gestaltung von ophthalmischen Linsen eingesetzt werden kann, um Unschärfebereiche, Verzeichnungen oder deutliche prismatische Sprünge zu vermeiden.

So kann die Gesamtbrechkraft der Linse in den beiden Referenzpunkten unterschiedlich sein.

In einem Beispiel wird die Brechkraft der Linse von einem ersten Wert ($M\_1, J0\_1, J45\_1$) im ersten Referenzpunkt zu einem zweiten Wert ($M\_2, J0\_2, J45\_2$) im zweiten Referenzpunkt überführt. Durch die kontinuierliche Änderung der Beugungseffizienz zumindest einer, zur Brechkraft der Linse beitragenden Beugungsordnung ist es möglich, diesen Übergang so zu gestalten, dass keine ungewollten Unschärfebereiche oder Verzeichnungen entstehen.

Der erste Referenzpunkt ist ein Fernbezugspunkt, in welchem die Brechkraft der Linse einen zum Sehen in die Ferne oder in mittleren Entfernungen geeigneten Wert beträgt. Der zweite Referenzpunkt ist ein Nahbezugspunkt, in welchem die Brechkraft der Linse einen zum Sehen in die Nähe geeigneten Wert beträgt. Die Linie, welche die beiden Referenzpunkte verbindet, kann eine Linie sein, welche die Durchblickpunkte (d.h. die Durchstoßpunkte der Sehstrahlen mit einer der refraktiven Flächen der ophthalmischen Linsen) bei Blickauslenkung (z.B. bei Blicksenkung) verbindet.

Ein von herkömmlichen Gleitsichtgläsern bekannter kontinuierlicher Übergang der Brechkraft zwischen zwei Durchblickpunkten bzw. Referenzpunkten mit unterschiedlichen Brechkraftvektoren (z.B. zwischen einem Fern- und einem Nahbezugspunt) wird durch einen kontinuierlichen Brechkraftverlauf verwirklicht, der darauf beruht, dass sich jede der Komponenten des (rein refraktiven) Brechkraftvektors ($M$, $J0$, $J45$) kontinuierlich bei stetiger Änderung des Durchblickpunkts ändert. Ein solcher Übergang weist keine ästhetisch auffälligen prismatischen Sprünge auf, wie sie von Bifokal- oder Trifokalgläsern bekannt sind. Unweigerliche Folge eines solchen kontinuierlichen Übergangs sind jedoch ungewollte Unschärfebereiche und Verzeichnungen in der Peripherie des Gleitsichtglases, die mit dem sogenannten Satz von Minkwitz in enger Verbindung stehen.

In einem erfindungsgemäßen Beispiel (d.h. bei einer progressiven Linse) kann ein kontinuierlicher Brechwertverlauf in der ophthalmischen Linse verwirklicht werden, um eine scharfe Abbildung in einem kontinuierlichen Bereich von Objektabständen zu ermöglichen, wobei die Stärke der peripher auftretenden ungewollten Unschärfebereiche vermindert wird. So kann z.B. der refraktive Brechkraftanteil des für das Sehen in die Nähe ausgelegten Bereichs der ophthalmischen Linse niedriger als bei einer rein refraktiven Linse gestaltet werden. Die fehlende sphärische Wirkung kann durch eine diffraktive Struktur erzeugt werden, welche sich z.B. in dem für das Sehen in die Nähe ausgelegten Bereich befindet. Wie oben beschrieben kann die diffraktive Struktur so ausgelegt werden, dass die Beugungseffizienz der die zusätzliche Wirkung erzeugenden Beugungsordnung zum Rand hin auf einen kleinen Wert, vorzugsweise 0%, abnimmt, weshalb es zu keinem zusätzlichen Astigmatismus in der Peripherie kommt. Da der Unterschied des sphärischen Anteils der refraktiven Brechkraft kleiner ist als bei einer herkömmlichen rein refraktiven Linse, ist ebenfalls die Stärke des peripheren ungewollten Astigmatismus kleiner. Dadurch können die Bereiche guter Sicht erweitert werden.

Die diffraktive Struktur ist ferner so gestaltet, dass im Bereich variabler Beugungseffizienz die Beugungseffizienz zumindest einer anderen, zusätzlichen Beugungsordnung in Abhängigkeit von dem Durchblickpunkt auf der ophthalmischen Linse räumlich variiert. Die zusätzliche Beugungsordnung kann eine Beugungsordnung sein, die ebenfalls zur Brechkraft der Linse beiträgt. Es ist jedoch möglich, dass die zusätzliche Beugungsordnung keinen Beitrag zur Brechkraft der Linse leistet. Vorzugsweise addieren sich die beiden Beugungseffizienzen zu mehr 75%, 80%, 90%, 95%, 98% oder 99% oder zu 100%.

Dabei nimmt die Beugungseffizienz der ersten der zumindest zwei Beugungsordnungen entlang der den Referenzpunkten verbindenden Linie stetig bzw. kontinuierlich ab und die Beugungseffizienz der zusätzlichen Beugungsordnung entlang der die Referenzpunkte verbindenden Linie stetig bzw. kontinuierlich zu. Die Änderungen können derart erfolgen, dass die Summe der Beugungseffizienz aller Beugungsordnungen in allen Punkten auf der den Referenzpunkten verbindenden Linie im Wesentlichen konstant bleibt.

Wie oben beschrieben kann die Beugungseffizienz der ersten Beugungsordnung im ersten Referenzpunkt einen hohen Wert und im zweiten Referenzpunkt einen niedrigeren Wert aufweisen. Die Beugungseffizienz der zusätzlichen Beugungsordnung kann umgekehrt im ersten Referenzpunkt einen niedrigen Wert und im zweiten Referenzpunkt einen höheren Wert haben.

Insbesondere kann die diffraktive Struktur einen ersten Bereich aufweisen, in welchem eine erste, n-te Beugungsordnung zur Brechkraft der Linse beiträgt und eine Beugungseffizienz $eta\_n$ mit einem hohen Wert (z.B. im Wesentlichen 100%) aufweist. Der Brechkraftbeitrag der n-ten Ordnung kann im Wesentlichen konstant sein. Bei stetiger Änderung des Durchblickpunktes entlang der die Referenzpunkte verbindenden Linie kann die Beugungseffizienz $eta\_n$ kontinuierlich von dem höheren Wert auf einen niedrigen Wert (z.B. 0%) überführt werden. In gleichem Maße, in dem die Beugungseffizienz $eta\_n$ der n-ten Beugungsordnung abnimmt, kann die Beugungseffizienz in den anderen Beugungsordnungen zunehmen. Im Grenzfall kann es sich dabei um eine einzige andere, zusätzliche Beugungsordnung $m$ handeln, so dass die Summe der Beugungseffizienzen $eta\_n$ und $eta\_m$ nahe an 100% kommt.

Die zweite Beugungsordnung kann - muss jedoch nicht - einen Beitrag zum Brechkraftvektor der Linse leisten. Leistet die zweite, m-te Beugungsordnung keinen Beitrag zum Brechkraftvektor der Linse, so ist ein stetiger Übergang der Beugungseffizienz der n-ten Ordnung $eta\_n$ zu 0% und $eta\_m$ zu 100% gleichbedeutend mit einem stetigen Verschwinden der diffraktiven Struktur.

Bei der ersten, n-ten und der zweiten, m-ten Beugungsordnung kann es sich jeweils um die 1. und 0. Beugungsordnung handeln. Die 0. Beugungsordnung leistet dabei keinen Beitrag zum Brechkraftvektor der Linse, da alle Komponente des der 0. Beugungsordnung zugeordneten diffraktiven Anteils des Brechkraftvektors $(0,0,0)$ gleich Null sind. Die 1. Beugungsordnung kann einen konstanten, von der Durchblickstelle unabhängigen Brechkraftbeitrag bzw. Brechkraft aufweisen. Es ist jedoch auch möglich, dass die 1. Beugungsordnung eine von der Durchblickstelle abhängige Brechkraft aufweist.

Die Objektabstandsfläche einer solchen ophthalmischen Linse ist, wenn alle Beugungsordnungen mit im Wesentlichen von Null verschiedener Beugungseffizienz gemeinsam betrachtet werden, keine Funktion wie bei einer herkömmlichen refraktiven Linse, sondern eine Relation, da bei einem festen Durchblickpunkt das von Objekten in mehreren Objektabständen ausgestrahlte Licht durch wenigstens eine Beugungsordnung scharf auf die Netzhaut abgebildet werden kann. Das durch den Träger einer solchen ophthalmischen Linse bei fester Akkommodation wahrgenommene und auf die Netzhaut scharf abgebildete Bild, das durch das in die n-te Beugungsordnung gebeugte Licht entsteht, verliert mit fallender Beugungseffizienz $eta\_n$ an Intensität. Gleichzeitig wächst die Intensität eines unscharfen Bildes, wobei die Unschärfe sowohl durch Aberrationen zweiter Ordnung (Defocus und/oder Astigmatismus) als auch Aberrationen höherer Ordnung (Koma, Trefoil, Sphärische Aberration, etc.) bedingt ist. Als Seheindruck ergibt sich deshalb bei fester Akkommodation und einer bestimmten Blickauslenkung zwischen dem ersten und zweiten Referenzpunkt eine stetige Kontrastabnahme des scharf abgebildeten Bildes, das durch das in die n-te Beugungsordnung gebeugte Licht entsteht. Die Minderung des Kontrasts wird jedoch als wesentlich weniger störend empfunden als z.B. durch ungewollten Astigmatismus verursachte Unschärfe, sodass die Bereiche, in denen die ophthalmische Linse eine für ihren Träger als gut befundene Abbildung liefert, relativ groß sind.

Da es bei dieser stetigen Überführung des diffraktiven Brechkraftanteils zwischen zwei Gebieten unterschiedlicher Brechkräfte nicht nötig ist, Brechkraftvektoren jedes Gebiets komponentenweise ineinander stetig zu überführen, werden durch Kombination einer diffraktiven Struktur mit einer refraktiven Struktur keine zusätzlichen Bereiche ungewollten Astigmatismus eingeführt. Der oben beschriebene Übergang der Brechkraft kann daher dazu eingesetzt werden, deutliche prismatische Sprünge sowie ungewollte Unschärfebereiche und Verzeichnungen komplett zu vermeiden oder zu reduzieren.

Die diffraktive Struktur kann ferner zumindest einen Bereich konstanter Beugungseffizienz aufweisen, in welchem die Beugungseffizienz der zumindest einen Beugungsordnung der diffraktiven Struktur konstant ist.

Vorzugsweise weist die diffraktive Struktur zumindest zwei Bereiche konstanter Beugungseffizienz auf, in welchen jeweils unterschiedliche Beugungsordnungen eine maximale (z.B. 100%) Beugungseffizienz aufweisen. Der Bereich variabler Beugungseffizienz kann an die beiden Bereiche konstanter Beugungseffizienz grenzen. Die beiden Bereiche unterschiedlicher Beugungseffizienz können unterschiedliche Brechkräfte aufweisen.

So kann die ophthalmische Linse zumindest zwei Bereiche unterschiedlicher Brechkraft aufweisen, in denen jeweils die 1. oder die 0. Beugungsordnung eine im Wesentlichen 100% Beugungseffizienz aufweisen. Die beiden Bereiche unterschiedlicher Brechkraft können an einen Bereich variabler Beugungseffizienz grenzen, in welchem ein kontinuierlicher Übergang der Beugungseffizienzen der beiden Beugungsordnungen zwischen dem Wert von im Wesentlichen 0% und dem Wert von im Wesentlichen 100% stattfindet. Im Bereich konstanter Beugungseffizienz, in welchem die Beugungseffizienz der 0. Ordnung im Wesentlichen 100% ist, ist der diffraktive Brechkraftanteil der 0. Ordnung Null.

Typischerweise befindet sich der Bereich, der insgesamt eine höhere Brechkraft aufweist und zum Sehen in die Nähe geeignet ist, im unteren Teil der ophthalmischen Linse. Der Bereich mit dem geringeren sphärischen Äquivalent befindet sich im oberen Teil der ophthalmischen Linse und kann zum Sehen in die Ferne oder in mittleren Objektentfernungen benutzt werden. Eine andere Anordnung ist ebenfalls möglich, z.B. für Linsen für spezielle Anwendungen (z.B. Pilotengläser). Unabhängig von der Anordnung der Bereiche unterschiedlicher Brechkraft kann die diffraktive Struktur (z.B. durch die 1. Beugungsordnung) einen positiven oder einen negativen Beitrag zum mittleren sphärischen Äquivalent leisten, so dass sich die diffraktive Struktur sowohl im oberen Teil (z.B. Fernteil) als auch im unteren Teil (z.B. Nahteil) der ophthalmischen Linse befinden kann.

Im obigen Beispiel handelt es sich bei den n-ten und m-ten Beugungsordnungen jeweils um die 1. und 0. Beugungsordnungen. Es kann es sich jedoch um zwei beliebige, von den 1. und 0. Beugungsordnungen verschiedene Beugungsordnungen handeln. Eine solche ophthalmische Linse kann - wie oben beschrieben -zwei Bereiche mit unterschiedlicher Brechkraft aufweisen, in denen die Beugungseffizienz genau einer Ordnung im Wesentlichen 100% beträgt, und welche an einen Bereich variabler Beugungseffizienz grenzen, in dem es einen stetigen Übergang der Beugungseffizienz gibt.

In den obigen beispielhaften ophthalmischen Linsen entsteht ein kontinuierlicher Übergang zwischen zwei Gebieten bzw. Durchblickpunkten einer ophthalmischen Linse, bei dem weder ein scharf abgegrenzter prismatischer Sprung, noch zusätzliche Unschärfegebiete und Verzeichnungen erzeugt werden. Damit ist es möglich, Unschärfegebiete und Verzeichnungen zu vermeiden oder im Vergleich zu einem herkömmlichen Progressivglas zu verkleinern. Hinsichtlich der Sehqualität bietet die Erfindung deshalb Vorteile gegenüber herkömmlichen Bifokal-, Trifokal- und Gleitsichtgläsern.

Zusätzlich oder alternativ zum Vermeiden von Unschärfen und prismatischen Sprüngen wird der bei einer progressiven Linse bereits vorhandene ungewollte Astigmatismus wenigstens teilweise kompensiert. Der Brechwertverlauf der progressiven Linse kann dabei beliebig sein, je nachdem ob die Linse hauptsächlich zum Sehen von Objekten in der Ferne, in der Nähe oder bei mittleren Entfernungen verwendet werden soll.

Dies wird dadurch erreicht, dass die ophthalmische Linse zumindest eine diffraktive Struktur aufweist, die ausgelegt ist, den durch den refraktiven Teil der Linse (insbesondere durch den kontinuierlichen Brechwertverlauf) entstehenden unerwünschten peripheren Astigmatismus wenigstens teilweise zu kompensieren. Vorzugsweise ist die diffraktive Struktur ausgelegt, den ungewollten Astigmatismus des refraktiven Brechkraftanteils der Linse in zumindest einer Beugungsordnung zumindest teilweise zu kompensieren, so dass der maximale auftretende Gesamtastigmatismus in der zumindest einen Beugungsordnung vorzugsweise unterhalb von 2,5 dpt, 2,0 dpt, 1,5 dpt, 1 dpt, 0,5 dpt, 0,3 dpt, oder 0,25 dpt, besonders bevorzugt unterhalb von 0,2 dpt ist.

Insbesondere weist die diffraktive Struktur einen astigmatischen Brechkraftanteil auf, welcher den Astigmatismus des rein refraktiven Teils der Linse wenigstens teilweise kompensiert. Zusammen ergeben die diffraktiven und refraktiven Brechkraftanteile eine kombinierte Brechkraft, deren ungewollter Astigmatismus kleiner ist als es bei einer rein refraktiven ophthalmischen Linse der Fall ist. Die Phasenfunktion einer solchen diffraktiven Struktur ist eine nicht rotationssymmetrische Phasenfunktion. Beispielhaft kann die nicht rotationssymmetrische diffraktive Struktur elliptische Gitterlinien besitzen. Eine solche diffraktive Struktur ist in der Lage, den Astigmatismus lokal in einem Punkt vollständig zu kompensieren. Vorteilhaft ist es jedoch, den Astigmatismus in mehr als einem Punkt zu kompensieren, was mit einem nicht symmetrischen diffraktiven Gitter erreicht werden kann.

Die Periodizität der diffraktiven Struktur kann derart gewählt werden, dass die diffraktive Struktur eine konstante oder eine nicht konstante diffraktive Brechkraft aufweist. Diffraktive Strukturen mit konstanter Brechkraft können Vorteile bei der Herstellung aufweisen. Mit einer nicht konstanten Brechkraft kann jedoch der unerwünschte Astigmatismus des refraktiven Teils besser kompensiert werden, da abhängig von dem Durchblickpunkt eine unterschiedliche diffraktive Wirkung zur vollständigen oder wenigstens teilweisen Kompensation des unerwünschten refraktiven Astigmatismus nötig sein kann. Dabei können Achslage und/oder Betrag des Astigmatismus des diffraktiven Brechkraftanteils variiert werden.

Nachfolgend wird eine beispielhafte Kompensation des ungewollten, peripheren Astigmatismus mit einer diffraktiven Struktur gemäß dem obigen Aspekt der Erfindung beschrieben.

Die diffraktive Struktur bzw. das diffraktive Gitter kann mittels einer Phasenfunktion beschrieben bzw. vorgegeben werden, wie z.B. die in der Patentanmeldungen WO 2012/065738, EP 2011/005782 und DE 102010051 beschriebene Phasenfunktion. Die Phasenfunktion $\Psi(x, y)$ beschreibt die Wirkung eines diffraktiven Gitters auf die Wellenfronten, die das durch das Gitter hindurchtretende Licht beschreiben. Der Beitrag des diffraktiven Gitters für die Abbildungsfehler zweiter Ordnung ist durch die zweiten Ableitungen der Phasenfunktion $\Psi^{(2)}(x, y)$ gegeben, die in der WO 2012/065738 in Tabelle 2 angegeben sind. Die entsprechende Gleichung für den Power-Vektor der ausfallenden Wellenfront ist dort angegeben als

$$\mathbf{T}_2\mathbf{S}'^{(2)} = \mathbf{T}_2\mathbf{S}^{(2)} + \nu\,\mathbf{F}^{(2)} - \mathbf{\Psi}^{(2)}(x, y)$$

Die Bestimmung eines diffraktiven Gitters, welches den unerwünschten Astigmatismus zumindest teilweise kompensiert, kann beispielsweise wie folgt erfolgen:

**Schritt 1:** Bestimmen des refraktiven Anteils $\mathbf{T}_2\mathbf{S}^{(2)} + \nu\mathbf{F}^{(2)}$.

Soll der vom refraktiven Anteil herrührende unerwünschte Astigmatismus ganz oder teilweise kompensiert werden, dann muss der in dem Vektor

$$\mathbf{S}'^{(2)} = \begin{pmatrix} S'^{(2,0)}(0,0) \\ S'^{(1,1)}(0,0) \\ S'^{(0,2)}(0,0) \end{pmatrix} = \begin{pmatrix} \partial^2 S'(\overline{x},\overline{y})/\partial\overline{x}^2 \\ \partial^2 S'(\overline{x},\overline{y})/\partial\overline{x}\partial\overline{y} \\ \partial^2 S'(\overline{x},\overline{y})/\partial\overline{y}^2 \end{pmatrix} \tag{1}$$

enthaltene Astigmatismus möglichst gleich dem Verordnungszylinder sein. Genauer gesagt, im Vergleich zu dem entsprechende Power-Vektor

$$\mathbf{S}'^{Verord\,(2)} = \begin{pmatrix} S'^{Verord\,(2,0)}(0,0) \\ S'^{Verord\,(1,1)}(0,0) \\ S'^{Verord\,(0,2)}(0,0) \end{pmatrix} = \begin{pmatrix} (S + Z/2) - Z/2\cos 2A \\ - Z/2\sin 2A \\ (S + Z/2) + Z/2\cos 2A \end{pmatrix} \tag{2}$$

muss der Differenzvektor

$$\delta\,\mathbf{S}'^{(2)} = \mathbf{S}'^{(2)} - \mathbf{S}'^{Verord\,(2)} =: \begin{pmatrix} \delta S'^{(2,0)}(0,0) \\ \delta S'^{(1,1)}(0,0) \\ \delta S'^{(0,2)}(0,0) \end{pmatrix} \tag{3}$$

möglichst klein sein.

Die $S, Z, A$ sind im einfachsten Fall direkt die Verordnungsdaten des Brillenträgers, d.h. Sphäre, Zylinder und Achse. Im allgemeinen Fall entsprechen $S, Z, A$ denjenigen Werten, die die lokale Wellenfront im tangentialen Koordinatensystem der zu betrachtenden Fläche, dessen y-Achse in der lokalen Brechungsebene liegt, besitzen muss, um an der Scheitelpunktkugel zu einer Wellenfront zu führen, die dort den Verordnungsdaten entspricht.

Die Kleinheit der Komponenten des Vektors $\delta\,\mathbf{S}'^{(2)}$ für die Beiträge des sphärischen Äquivalents und des Astigmatismus kann getrennt gefordert werden. Der in $\delta\,\mathbf{S}'^{(2)}$ enthaltene Astigmatismus ist dann möglichst klein, wenn

$$Ast(\delta \mathbf{S}'^{(2)}) = \sqrt{\left(\delta S'^{(2,0)}(0,0) - \delta S'^{(0,2)}(0,0)\right)^2 + 4\delta S'^{(1,1)}(0,0)^2}$$

$$= \sqrt{\begin{aligned}&\left(\delta S'^{(2,0)}(0,0) + vF^{(2,0)}(0,0) - \Psi^{(2,0)}(0,0) - (\delta S'^{(0,2)}(0,0) + vF^{(0,2)}(0,0) - \Psi^{(0,2)}(0,0))\right)^2 \\ &+ 4\left(\delta S'^{(1,1)}(0,0) + vF^{(1,1)}(0,0) - \Psi^{(1,1)}(0,0)\right)^2\end{aligned}}$$

$$(4)$$

möglichst gering ist. Im Idealfall ist $Ast(\delta \mathbf{S}'^{(2)}) = 0$ .

Dies kann grundsätzlich nicht über das ganze Glas gelingen. Es ist jedoch bereits erstrebenswert und ausreichend, die Bedingung $Ast(\delta \mathbf{S}'^{(2)}) = 0$ lokal an einer oder mehreren isolierten Stellen im Brillenglas zu erreichen. In der Umgebung einer jeden solchen Stelle im Glas ist dann der unerwünschte Astigmatismus zumindest annähernd Null. Im einfachsten Fall ergibt sich dabei eine Phasenfunktion, deren zweite Ableitungen an der Referenzstelle feste Werte haben, die durch die refraktiven Eigenschaften an dieser Stelle vorgegeben sind.

**Schritt 2**

Durch Integration ergibt sich dann eine quadratische Phasenfunktion. Aufgrund der für jede (zweimal stetig differenzierbare) Funktion gültigen Identität

$$\Psi(\overline{x}, \overline{y}) = \Psi(0,0)$$
$$+ \int_0^{\overline{x}} \Psi^{(1,0)}(0,0)d\overline{x}' + \int_0^{\overline{y}} \Psi^{(0,1)}(0,0)d\overline{y}' \qquad (5a)$$
$$+ \int_0^{\overline{x}}\int_0^{\overline{x}'} \Psi^{(2,0)}(\overline{x}'',0)d\overline{x}''d\overline{x}' + \int_0^{\overline{y}}\int_0^{\overline{x}} \Psi^{(1,1)}(\overline{x}',0)d\overline{x}'d\overline{y}' + \int_0^{\overline{y}}\int_0^{\overline{y}'} \Psi^{(0,2)}(\overline{x}, \overline{y}'')d\overline{y}''d\overline{y}'$$

kann man durch Integration aus den zweiten Ableitungen von $\Psi(\overline{x}, \overline{y})$ auf die Funktion $\Psi(\overline{x}, \overline{y})$ selbst schließen. Sind die zweiten Ableitungen als Funktion von $(\overline{x}, \overline{y})$ nicht bekannt, so kann man näherungsweise $\Psi^{(2,0)}(\overline{x}'',0) \approx \Psi^{(2,0)}(0,0)$, $\Psi^{(1,1)}(\overline{x}',0) = \Psi^{(1,1)}(0,0)$, $\Psi^{(0,2)}(\overline{x}, \overline{y}'') = \Psi^{(0,2)}(0,0)$ setzen und erhält

$$\Psi(\overline{x}, \overline{y}) = \Psi(0,0)$$
$$+ \left(\Psi^{(1,0)}(0,0)\right)\overline{x} + \left(\Psi^{(0,1)}(0,0)\right)\overline{y} \qquad (5b)$$
$$+ \frac{1}{2}\left(\Psi^{(2,0)}(0,0)\right)\overline{x}^2 + \left(\Psi^{(1,1)}(0,0)\right)\overline{xy} + \frac{1}{2}\left(\Psi^{(0,2)}(0,0)\right)\overline{y}^2$$

Dies kann auch in Form der Funktion

$$\Psi(\overline{x}, \overline{y}) = a_{xx}\overline{x}^2 + a_{xy}\overline{xy} + a_{yy}\overline{y}^2 + b_x\overline{x} + b_y\overline{y} + c , \qquad (6)$$

geschrieben werden, deren Isolinien Ellipsen sind und in deren Mittelpunkt der Referenzpunkt liegt.

**Schritt 3**

Betrachtet man die Bedingung nach der obigen Gleichung (4), dann erkennt man, dass nicht $\Psi^{(2,0)}(0,0)$ und $\Psi^{(0,2)}(0,0)$ beide einzeln, sondern nur die Differenz $\Psi^{(2,0)}(0,0) - \Psi^{(0,2)}(0,0)$ eingeht. Das bedeutet, dass man sogar noch eine additive Konstante $\tilde{a}$ in der Gleichung 5a, 5b für $\Psi(\overline{x}, \overline{y})$ in Schritt (2) frei hat, die zu der Darstellung der Form

$$\Psi(\overline{x}, \overline{y}) = \left(a_{xx} + \tilde{a}\right)\overline{x}^2 + a_{xy}\overline{xy} + \left(a_{yy} + \tilde{a}\right)\overline{y}^2 + b_x\overline{x} + b_y\overline{y} + c , \qquad (7)$$

führt. Die Konstante $\tilde{a}$ entspricht der Überlagerung mit einer Sphäre. Sie kann z.B. wahlweise so eingerichtet werden,

- dass das sphärische Äquivalent der korrigierten Wellenfront sich nicht ändert
- oder dass ein Hauptschnitt der korrigierten Wellenfront die Krümmung Null hat
- oder dass die Exzentrizität der elliptischen Isolinien von $\Psi(\overline{x}, \overline{y})$ so eingestellt wird, dass sie unter weiteren Aspekten, z.B. fertigungstechnischen Aspekten möglichst günstig ist.

**Schritt 4**

Variiert der refraktive Astigmatismus in der Umgebung des Referenzpunktes, dann führt die Phasenfunktion aus der Lösung (5a, 5b) zu Abweichungen von der Idealbedingung $Ast(\delta \mathbf{S}'^{(2)}) = 0$. In einem solchen Fall kann jedoch die Phasenfunktion so abgewandelt werden, dass $Ast(\delta \mathbf{S}'^{(2)})$ in einer vorgegebenen Umgebung des Referenzpunktes möglichst niedrig wird. Eine Folge davon kann sein, dass die Isolinien nicht mehr elliptisch sind, sondern eine kompliziertere Form besitzen.

**Schritt 5**

Die nach den Schritten 1-4 festzulegende Phasenfunktion $\Psi(\overline{x}, \overline{y})$ entspricht einem diffraktiven Gitter, wie im o.g. Stand der Technik beschrieben.

**Schritt 6**

Das diffraktive Gitter führt gewolltermaßen zu anderen Wellenfronteigenschaften, als dies ohne Gitter der Fall wäre. Anstatt einen abrupten Übergang am Rand eines mit dem Gitter versehenen Bereiches in Kauf zu nehmen, wird gemäß einem Aspekt der Erfindung die Beugungseffizienz des Gitters am Rand so variiert, dass die Intensität der Beugungsordnung, die im Inneren die durch $\Psi(\overline{x}, \overline{y})$ beschriebene Wirkung erzielt, nach außen hin von einem Maximalwert nahe 100% auf nahe 0% abklingt, zugunsten der Intensität in derjenigen Ordnung m=0, in der das Gitter keine zusätzliche Wirkung einführt.

**Schritt 7**

Sind mehrere Referenzpunkte auf dem Glas vorhanden, ist es vorteilhaft, eine Überlappung der verschiedenen Gitter zu vermeiden. Das beschriebene Verfahren bietet insbesondere die Flexibilität, die Größe der Bereiche an andere Erfordernisse anzupassen. In einem bevorzugten Beispiel erfolgt eine Kompensation des peripheren Astigmatismus durch je einen Korrekturbereich links bzw. rechts der Progressionszone.

In einer bevorzugten Ausführungsform kann eine Kompensation des unerwünschten Astigmatismus mit zwei zueinander senkrecht stehenden, von der 0. Beugungsordnung verschiedenen Beugungsordnungen erfolgen. Grundsätzlich stehen die Hauptschnitte stärkster und schwächster Krümmung der durch die ophthalmische Linse tretenden Wellenfront, welche durch die rein refraktive Wirkung erzeugt wurden, senkrecht zueinander. Eine solche Kompensation des unerwünschten Astigmatismus mit zwei zueinander senkrecht stehenden Beugungsordnungen erlaubt es daher, an derselben Durchblickstelle den Astigmatismus für zwei unterschiedliche Objektabstände (z.B. für den Blick in die Ferne und den Blick in die Nähe) zu kompensieren.

Insbesondere ist es möglich, den Astigmatismus für eine Objektentfernung ganz oder teilweise zu kompensieren, indem durch eine der Beugungsordnungen (z.B. die Ordnung (1,0)) eine diffraktive Wirkung erzeugt wird, welche die Krümmung der Wellenfront im schwächer gekrümmten Hauptschnitt an die Krümmung der Wellenfront im stärker gekrümmten Hauptschnitt angleicht, sodass z.B. scharfes Sehen in die Nähe möglich ist. Im selben Durchblickpunkt bewirkt die diffraktive Wirkung der anderen Beugungsordnung (z.B. der Ordnung (0,1)), dass die Krümmung im stärker gekrümmten Hauptschnitt an die Krümmung im schwächer gekrümmten Hauptschnitt angeglichen wird, sodass ebenfalls scharfes Sehen in einer anderen Objektentfernung (z.B. für Objekte in der Ferne) möglich ist.

Die obige Erläuterung bezieht sich auf ophthalmische Linsen, die insgesamt eine sphärische Wirkung im Fern- und Nahteil besitzen. Eine entsprechende Anpassung der Krümmungen kann auch für eine ophthalmische Linse mit astigmatischen Verordnungen für die Ferne und Nähe vorgenommen werden, wobei sich die astigmatischen Verordnungen gegebenenfalls in Achse und/oder Betrag des Astigmatismus unterscheidenden können.

Die auf oder in einer ophthalmischen Linse vorhandene diffraktive Struktur zur Kompensation des unerwünschten Astigmatismus weist in dem Gebiet, in dem ungewollter refraktiver Astigmatismus simultan für zwei Objektabstände kompensiert werden soll, eine Pfeilhöhe bzw. ein Höhenprofil mit Stufen auf, die bzw. das im Wesentlichen der Form von (gegebenenfalls deformierten) Rauten, Quadraten oder Rechtecken ähnelt. Die Unstetigkeiten der Pfeilhöhe weisen somit die Form eines gegebenenfalls verzerrten 2-dimensionalen Gitters auf. Eine solche diffraktive Struktur unterscheidet sich erheblich von den in herkömmlichen ophthalmischen Linsen verwendeten diffraktiven Elementen, deren Pfeilhöhe in der Regel langgezogene streifenartige Stufen aufweist und ringförmige Bereiche zwischen den Unstetigkeiten besitzt.

In den obigen Beispielen kann die diffraktive Struktur derart angeordnet werden, dass zumindest ein Teil der diffraktiven Struktur im Wesentlichen Durchblickstellen bzw. Bereichen der Linse abdeckt, in denen die refraktive Brechkraft einen peripheren, unerwünschten Astigmatismus, welcher größer ist als ein vorgegebener Schwellenwert (z.B. 0,5 dpt, 0,75 dpt, 1 dpt, etc.) ist, aufweist. Wie oben beschrieben, kann mittels der diffraktiven Struktur der unerwünschte Astigmatismus für zumindest eine Wellenlänge reduziert werden, vorzugsweise auf einen Wert von höchstens 2,5 dpt, 2,0 dpt, 1,5 dpt, 1 dpt, 0,5 dpt, 0,3 dpt, 0,25 dpt oder 0,2 dpt. Um zusätzliche Unschärfebereiche zu vermeiden, kann die diffraktive Struktur - wie oben beschrieben - zu ihrem Rand hin kontinuierliche Übergänge der Beugungseffizienz der die diffraktive astigmatische Brechkraft erzeugenden Beugungsordnung aufweisen.

Die diffraktive Struktur kann sich über die gesamte Oberfläche der ophthalmischen Linse erstrecken. Dies hat den Vorteil, dass durch den zusätzlichen diffraktiven Brechkraftanteil die ophthalmische Linse dünner gebaut werden kann.

Die diffraktive Struktur kann sich alternativ nur über einen Teil bzw. Teile der Linse erstrecken. So kann die diffraktive Struktur außerhalb der hauptsächlich zum Sehen benutzten Gebiete der Linse bzw. außerhalb der Bereiche guter Sicht angeordnet werden. Unter Bereichen guter Sicht werden alle Bereiche der Linse verstanden, in welchen der unerwünschte Astigmatismus der Linse bzw. der refraktive astigmatische Fehler unterhalb eines vorgegebenen Schwellenwerts (von z.B. 0,5 oder 0,75 oder 1,0 dpt) ist. Somit können Nachteile der diffraktiven Strukturen wie z.B. auftretendes Streulicht oder Nebenbilder in den hauptsächlich genutzten Bereichen der ophthalmischen Linse vermieden werden. Es ist jedoch möglich, dass zumindest Teile der Bereiche guter Sicht eine diffraktive Struktur enthalten, z.B. wenn die diffraktive Struktur zur Korrektur von chromatischen Aberrationen ausgelegt ist.

Erstreckt sich die zumindest eine diffraktive Struktur nur über Teile der ophthalmischen Linse, kann an die Grenze bzw. am Rand zwischen dem rein refraktiven Teil und der diffraktiven Struktur eine Unstetigkeit des Prismas und/oder der Brechkraft auftreten. Die diffraktive Struktur und der refraktive Teil werden daher derart ausgelegt, dass an zumindest einem Teil der Grenze zwischen dem refraktiven Teil und der diffraktiven Struktur das Gesamtprisma der ophthalmischen Linse keine Unstetigkeit aufweist.

Die ophthalmische Linse mit zumindest einer, sich über Teile der Linse erstreckenden diffraktiven Struktur weist folglich keine prismatischen Sprünge bzw. keine Unstetigkeit des Gesamtprismas bzw. der prismatischen Wirkung der Linse an zumindest einem Teil der Grenze zwischen einem Bereich der Linse mit rein refraktiver Brechkraft und einem Bereich mit diffraktiver und gegebenenfalls refraktiver Brechkraft auf. Eine solche Anpassung des Gesamtprismas der Linse an die Grenze zwischen einem rein refraktiven Teil und einem diffraktiven Teil wird vorzugsweise vorgenommen, um Bildsprünge beim Schweifen des Blickes zwischen diesen Gebieten zu vermeiden. Vorzugsweise erfolgt die Anpassung des Gesamtprismas der Linse mit dem Ziel, einen stetigen Verlauf sowohl des horizontalen als auch des vertikalen Prismas entlang der Grenze der beiden Gebiete zu erreichen. Die Anpassung kann dabei entweder für eine Beugungsordnung, oder für eine in geeigneter Weise mit der Beugungseffizienz gewichtete und über mehrere Beugungsordnungen gemittelte prismatische Wirkung erfolgen.

Die Anpassung der prismatischen Wirkung kann unabhängig vom Verlauf der Beugungseffizienz und/oder der Brechwert erfolgen. Eine Anpassung der prismatischen Wirkung kann insbesondere dann von Vorteil sein, wenn die diffraktive Struktur an zumindest einem Teil ihres Randes eine Beugungseffizienz nahe 100% aufweist und mit diesem Rand an ein Gebiet mit rein refraktiver Brechkraft grenzt. Eine Anpassung der prismatischen Wirkung kann an nur einem Teil des Randes bzw. der Grenze der diffraktiven Struktur zum refraktiven Teil erfolgen. An einem anderen Teil des Randes der diffraktiven Struktur kann von einer Anpassung der prismatischen Wirkung absichtlich abgesehen werden, um z.B. ungewollte astigmatische Bereiche zu vermeiden.

Die Anpassung der prismatischen Wirkung kann z.B. dadurch erfolgen, dass die prismatische Wirkung der refraktiven Struktur zum Rand hin abnimmt oder verschwindet. Eine andere Möglichkeit besteht darin, eine Unstetigkeit der prismatischen Wirkung durch die refraktive Struktur der ophthalmischen Linse zuzulassen. Diese Unstetigkeit kann eine, durch die diffraktive Struktur verursachte Unstetigkeit der prismatischen Wirkung an einem Teil ihres Randes im Wesentlichen kompensiert, sodass sich ein stetiger Verlauf des gesamten Prismas ergibt. Eine Kompensation der Unstetigkeit der prismatischen Wirkung kann auf der Vorder- und/oder Rückseite des ophthalmischen Glases erfolgen. Ebenfalls ist es möglich, dass sich die diffraktive Struktur im Material des Glases selbst befindet.

Vorzugsweise wird die diffraktive Struktur ausgelegt, um die chromatische Aberration zu verringern. Insbesondere kann die diffraktive Struktur derart ausgelegt sein, dass für wenigstens ein Gebiet von Durchblickpunkten auf der Linse die chromatische Aberration der diffraktiven Struktur und die chromatische Aberration der refraktiven Flächen der ophthalmischen Linse sich wenigstens teilweise kompensieren.

Da durch Kombination von refraktiven und diffraktiven Strukturen eine vollständige Kompensation der chromatischen Aberration im Allgemeinen nicht zusammen mit einer Kompensation von astigmatischer Brechkraft der jeweiligen Strukturen erreicht werden kann, werden vorzugsweise beide Ziele gegeneinander abgewogen, um optimale Ergebnisse zu erzielen.

Gemäß einem weiteren Aspekt der Erfindung wird ein Verfahren zum Optimieren von ophthalmischen Linsen mit zumindest einer diffraktiven Struktur gemäß dem obigen Aspekt vorgeschlagen. Das Verfahren umfasst

Vorgabe einer zu optimierenden ophthalmischen Linse;
Optimieren der vorgegebenen Linse, derart, dass an zumindest einer Bewertungsstelle der Linse die Abweichung des Werts zumindest einer optischen Eigenschaft der ophthalmischen Linse von einem Sollwert minimiert wird. Die ophthalmische Linse ist eine progressive Brillenlinse.

Die Vorgabe einer zu optimierenden Linse kann die Vorgabe der refraktiven Flächen der Linse und der diffraktiven Struktur und deren Anordnung auf der zu optimierenden Linse umfassen. Vorzugsweise werden die zumindest eine refraktive Fläche und/oder die zumindest eine diffraktive Struktur mittels einer flexiblen mathematischen Darstellung (z.B. einer Spline-Darstellung oder einer polynomischen Darstellung) beschrieben.

Das Optimierungsverfahren kann ferner eine Vorgabe bzw. ein Festlegen eines Objektabstandsmodells und/oder ein Model für die Gebrauchsstellung der zu optimierenden Linse umfassen. Das Objektabstandsmodell kann eine Relation sein, wobei einem Durchblickpunkt mehrere Objektvergenzen bzw. mehrere Objektabstandsflächen zugordnet werden. Die Linse kann unter Berücksichtigung des vorgegebenen Objektabstandsmodells in der vorgegebenen Gebrauchsstellung der Linse optimiert werden, wobei bei mindestens einem Durchblickpunkt, vorzugsweise an mehreren Durchblickpunkten eine scharfe Abbildung bei zumindest einem Objektabstand möglich ist. Die Gebrauchsstellung der ophthalmischen Linse kann durch den Fassungsscheibenwinkel und/oder den Hornhautscheitelabstand und/oder die Vorneigung und/oder die Pupillendistanz und/oder andere Daten charakterisiert werden.

Das Verfahren zum Optimieren bzw. Herstellen einer ophthalmischen Linse mit zumindest einer diffraktiven Struktur kann ferner Erfassen von Daten bezüglich einer zu erreichenden sphärischen und/oder astigmatischen und/oder prismatischen Wirkung der ophthalmischen Linse; Erfassen von Daten bezüglich des Objektabstandsmodells und - im Fall eines Brillenglases - Erfassen von Daten bezüglich einer individuellen oder durchschnittlichen Gebrauchsstellung des Brillenglases enthalten. Die Daten bezüglich der zu erreichenden Wirkung können Rezeptdaten eines Brillenträgers bzw. Rezeptdaten für die zu optimierende ophthalmische Linse sein. Die Daten bezüglich einer individuellen oder durchschnittlichen Gebrauchsstellung des Brillenglases können den Fassungsscheibenwinkel und/oder den Hornhautscheitelabstand und/oder die Vorneigung und/oder die Pupillendistanz und/oder andere Daten, welche die Gebrauchsstellung des Brillenglases charakterisieren, umfassen.

Das Optimieren kann ein Abändern zumindest eines variablen Parameters der diffraktiven Struktur und/oder zumindest eines variablen Flächenparameters der refraktiven Fläche umfassen. Insbesondere kann das Optimieren eine Variation bzw. eine Anpassung der Beugungseffizienz und/oder der Brechkraft (z.B. der sphärische, astigmatischen und/oder prismatischen Brechkraft) zumindest einer, vorzugsweise zweier Beugungsordnung umfassen. Die Variation bzw. die Anpassung der Beugungseffizienz und/oder der Brechkraft zumindest einer Beugungsordnung kann nach einem der oben beschriebenen beispielhaften Verfahren erfolgen. Wie oben beschrieben kann die Variation bzw. die Anpassung der zumindest einer Beugungsordnung derart erfolgen, dass ein kontinuierlicher Übergang der Brechkraft zwischen zwei Bereichen unterschiedlicher Brechkraft erfolgt, dass der Bereich guter Sicht vergrößert wird, dass der unerwünschte Astigmatismus in zumindest einem Bereich der Linse minimiert wird und/oder dass die chromatische Aberration minimiert wird. Zusätzlich oder alternativ kann das Optimieren eine Anpassung des Gesamtprismas der Linse an die Grenze zwischen einem rein refraktiven Teil und einem diffraktiven Teil umfassen. Eine solche Anpassung wird vorzugsweise derart vorgenommen, dass sowohl das horizontale als auch das vertikale Prisma entlang zumindest einem Teil der Grenze der beiden Gebiete einen stätigen Verlauf aufweisen.

Vorzugsweise wird die diffraktive Struktur mittels einer Phasenfunktion beschrieben, wie z.B. die in der Druckschrift WO 2012/065738 eingeführte Phasenfunktion $\Psi(x, y)$. Freiheitsgrad der Optimierung kann entsprechend die Pfeilhöhe zumindest einer der refraktiven bzw. brechenden Flächen der Linse und/oder die Phasenfunktion $\Psi(x, y)$ sein, wobei die Phasenfunktion für jede der zu optimierenden Beugungsordnungen der diffraktiven Struktur ausgewertet und variiert wird.

Das Optimieren kann derart erfolgen, dass für eine vorgegebene diffraktive Struktur zumindest eine refraktive Fläche des Glases optimiert wird. Ebenfalls ist die Optimierung der diffraktiven Struktur bei einer fest vorgegebenen refraktive Fläche möglich. Ferner können sowohl die diffraktive Struktur als auch zumindest eine refraktive Fläche des Glases optimiert werden, wobei die Optimierung der Flächen simultan oder abwechselnd erfolgen kann.

Die zu optimierende zumindest eine optische Eigenschaft der Linse kann die chromatische Aberration und/oder der zumindest eine monochromatische Abbildungsfehler sein, wie z.B. der Refraktionsfehler, die astigmatische Abweichung und/oder das Prisma der Linse. Wie oben beschrieben kann das Minimieren der Abweichung der zumindest einen optischen Eigenschaft von einem Sollwert durch eine Variation der Phasenfunktion der diffraktiven Struktur bzw. durch eine Variation des (lokalen) Brechwerts und/oder der (lokalen) Beugungseffizienz der diffraktiven Struktur für mindestens eine, bevorzugt für zumindest zwei Beugungsordnungen erfolgen. Vorzugsweise wird die zumindest eine optische Eigenschaft an einer Vielzahl von Bewertungsstellen und für zumindest eine Beugungsordnung ausgewertet und mit dem entsprechenden Sollwert verglichen, wobei die Vielzahl von Bewertungsstellen zumindest 1000, vorzugsweise zumindest 2000, weiter bevorzugt zumindest 5000, besonders bevorzugt zumindest 10000 Bewertungsstellen umfasst. Grundsätzlich gibt es keine Beschränkung in der Anzahl der Bewertungsstellen. So kann die Anzahl der Bewertungsstellen über 20000 sein. Vorzugsweise erfolgt das Optimieren derart, dass der unerwünschte Astigmatismus und/oder die chromatische Aberration minimiert wird bzw. werden.

Ferner kann es vorteilhaft sein, dass die Phasenfunktion der diffraktiven Struktur bei der Optimierung neben ihren optischen Eigenschaften zusätzliche Eigenschaften aufweisen soll, welche die Fertigung erleichtern. Dies kann z.B. dadurch erreicht werden, indem die Phasenfunktion der diffraktiven Struktur in geeigneter Weise mathematisch beschrieben ist (z.B. mit Hilfe von Splines) und bei der Optimierung geeignete Nebenbedingungen bzw. Sollwerte vorgegeben werden (z.B. Nebenbedingungen bzw. Sollwerte für beliebige Ableitungen der Phasenfunktion). Eine andere Möglichkeit, eine einfache Fertigbarkeit sicherzustellen, besteht darin, geeignete analytische Funktionen als Phasenfunktion zuzulassen, welche vergleichsweise einfach zu fertigenden diffraktiven Strukturen entsprechen.

Vorzugsweise erfolgt das Optimieren der ophthalmischen Linse in Gebrauchsstellung der Linse, wobei die Eigenschaften der ophthalmischen Linse in Gebrauchsstellung und beim Vorhandensein der zumindest einen diffraktiven Struktur berücksichtigt werden. Die Berechnung der Eigenschaften einer Linse mit zumindest einem diffraktiven Gitter in Gebrauchsstellung wird z.B. in WO 2012/065738 im Detail beschrieben.

Vorzugsweise erfolgt das Verfahren zum Optimieren iterativ, wobei nach jedem Schritt des Modifizierens der ophthalmischen Linse ein Auswerten an zumindest einer Bewertungsstelle zumindest einer optischen Eigenschaft der modifizierten ophthalmischen Linse, ein Bewerten der modifizierten ophthalmischen Linse in Abhängigkeit von der zumindest einen optischen Eigenschaft und gegebenenfalls ein weiteres Modifizieren der ophthalmischen Linse erfolgt. Das iterative Verfahren kann nach einem festgelegten Schritt abgebrochen werden. Vorzugsweise wird das Verfahren dann abgebrochen, wenn das Bewerten des optischen Elements positiv ist, d.h. wenn ein bestimmtes Gütekriterium erfüllt wird.

Vorzugsweise umfasst das Optimieren oder Modifizieren der ophthalmischen Linse eine Berechnung einer Zielfunktion, welche von der zumindest einen optischen Eigenschaft abhängt. Ist die ophthalmische Linse ein Brillenglas kann die Zielfunktion eine monokulare oder binokulare Zielfunktion sein.

Das Optimieren der ophthalmischen Linse kann z.B. eine Minimierung einer polychromatischen Zielfunktion umfassen, um z.B. eine optimale Korrektur der chromatischen und astigmatischen Aberrationen einer ophthalmischen Lise zu erreichen. WO 2012/065737 A1 offenbart eine geeignete polychromatische Zielfunktion:

$$F = \sum_{i,\lambda} g_Z(i,\lambda)(Z_\Delta(i,\lambda) - Z_{\Delta,\text{Soll}}(i,\lambda))^2 + g_S(i,\lambda)(S_\Delta(i,\lambda) - S_{\Delta,\text{Soll}}(i,\lambda))^2.$$

Dabei ist $F$ die zu minimierende Zielfunktion, $S_\Delta$ der Refraktionsfehler des sphärischen Äquivalents, $Z_\Delta$ der Betrag der astigmatischen Abweichung, $S_{\Delta,\text{Soll}}$ und $Z_{\Delta,\text{Soll}}$ die entsprechenden Sollwerte des Refraktionsfehlers und des Betrags der astigmatischen Abweichung und $g_S(i, \lambda)$ und $g_Z(i, \lambda)$ die entsprechenden Gewichte des Refraktionsfehlers und des Betrags der astigmatischen Abweichung. Alle Abbildungseigenschaften werden dabei bei einer bestimmten Wellenlänge ausgewertet. Die Summe läuft über die verschiedenen Bewertungsstellen i des Brillenglases (d.h. über verschiedene Blickrichtungen), sowie über die (zumindest zwei) verschiedenen Wellenlängen $\lambda$.

Gemäß einem Aspekt der vorliegenden Erfindung kann es bei einer Durchblickstelle bzw. bei einer Bewertungsstelle mehrere Beugungsordnungen mit Beugungseffizienz > 0% geben. Bei der Berechnung der Zielfunktion können gemäß einem Aspekt der Erfindung alle Beugungsordnungen mit einer von Null unterschiedlichen Beugungseffizienz einbezogen werden, wobei die lokalen Sollwerte und Gewichtungen ebenfalls abhängig von der Beugungsordnung sind. Ferner werden der Refraktionsfehler des sphärischen Äquivalents und der Betrag der astigmatischen Abweichung für die einzelnen Beugungsordnungen berechnet. Eine beispielsweise polychromatische Funktion, in welcher mehrere Beugungsordnungen einbezogen sind, ist die Funktion:

$$F = \sum_{i,\lambda,\nu} g_Z(i,\lambda,\nu)(Z_\Delta(i,\lambda,\nu) - Z_{\Delta,\text{Soll}}(i,\lambda,\nu))^2 + g_S(i,\lambda,\nu)(S_\Delta(i,\lambda,\nu) - S_{\Delta,\text{Soll}}(i,\lambda,\nu))^2.$$

In der obigen Formel ist $F$ die zu minimierende Zielfunktion, $S_\Delta$ der Refraktionsfehler des sphärischen Äquivalents, $Z_\Delta$ der Betrag der astigmatischen Abweichung, $S_{\Delta,\text{Soll}}$, $Z_{\Delta,\text{Soll}}$ die entsprechenden Sollwerte des Refraktionsfehlers und des Betrags der astigmatischen Abweichung und $g_S(i, \lambda, v)$ und $g_Z(i, \lambda, v)$ die entsprechenden Gewichte. Alle Abbildungseigenschaften werden dabei bei einer bestimmten Wellenlänge $\lambda$ und für eine bestimmte Beugungsordnung $v$ ausgewertet. Die Summe läuft über verschiedene Bewertungsstellen $i$ des Brillenglases, d.h. Blickrichtungen, über die verschiedenen Wellenlängen und über die verschiedenen Beugungsordnungen $v$.

Vorzugsweise werden die Gewichte verschiedener Beugungsordnungen bei identischer Durchblickstelle bzw. Bewertungsstelle sowie identischer Wellenlänge selbst als eine monoton steigende Funktion der Beugungseffizienz gewählt.

Das Verfahren zum Optimieren bzw. Herstellen einer ophthalmischen Linse kann ferner ein Bereitstellen von Bearbeitungsdaten der optimierten bzw. gegebenenfalls in mehreren Schritten modifizierten ophthalmischen Linse umfassen. Die Bearbeitungsdaten können Flächendaten der refraktiven Flächen sowie Daten des diffraktiven Gitters (wie z.B. Periode, Blazingwinkel, Gitterlinien, etc.) umfassen. Ebenfalls können die Bearbeitungsdaten Daten bezüglich der Dicke der ophthalmischen Linse und/oder des Brechungsindexes der ophthalmischen Linse umfassen.

Das Verfahren zum Herstellen einer ophthalmischen Linse kann ein Fertigstellen der ophthalmischen Linse nach den bereitgestellten Bearbeitungsdaten umfassen. Geeignete Verfahren zum Herstellen von Linsen mit diffraktiven Gittern sind aus dem Stand der Technik bekannt.

Des Weiteren wird eine Vorrichtung zum Optimieren oder Herstellen einer ophthalmischen Linse mit zumindest einer diffraktiven Struktur vorgeschlagen, wobei die ophthalmische Linse eine progressive Brillenlinse ist. Die Vorrichtung umfasst:

Mittel zur Vorgabe einer zu optimierenden ophthalmischen Linse; und

Optimierungsmittel, welche ausgelegt sind, ein Optimieren des optischen Elements nach einem bevorzugten beispielhaften Verfahren zum Optimieren einer ophthalmischen Linse durchzuführen.

Insbesondere sind die Optimierungsmittel ausgelegt, die zu optimierende Linse so zu optimieren, dass an zumindest einer Bewertungsstelle der Linse die Abweichung des Werts zumindest einer optischen Eigenschaft der ophthalmischen Linse von einem Sollwert minimiert wird. Die Optimierungsmittel können mittels geeignet konfigurierten bzw. programmierten Computern, spezialisierter Hardware und/oder Computernetze oder Computersysteme und so weiter implementiert werden.

Die Vorrichtung zum Herstellen eines optischen Elements kann ferner Speichermittel zum Speichern von Bearbeitungsdaten der optimierten ophthalmischen Linse umfassen. Ferner kann die Vorrichtung Bearbeitungsmittel umfassen, welche ausgelegt sind, die optimierte ophthalmische Linse nach den bereitgestellten Bearbeitungsdaten zu fertigen.

Des Weiteren kann die Vorrichtung Erfassungsmittel umfassen, welche ausgelegt sind, Daten bezüglich einer zu erreichenden Wirkung der ophthalmischen Linse und/oder Daten bezüglich einer individuellen oder durchschnittlichen Gebrauchsstellung der ophthalmischen Linse (z.B. des Brillenglases) zu erfassen.

Weitere Aufgaben, Merkmale und Vorteile der vorliegenden Erfindung werden aus der nachfolgenden Beschreibung beispielhafter Ausführungsformen mit Bezug auf die Zeichnungen ersichtlich.

Es zeigen:

**Fig. 1**      eine Anordnung unterschiedlicher Bereiche einer beispielhaften ophthalmischen Linse mit einer diffraktiven Struktur;

**Fig. 2**      einen beispielhaften Verlauf der Beugungseffizienz unterschiedlicher Beugungsordnungen im Bereich variabler Beugungseffizienz;

**Fig. 3**      einen beispielhaften Strahlenverlauf beim Sehen durch eine beispielhafte ophthalmische Linse mit einer diffraktiven Struktur;

**Fig. 4**      Beispiele ophthalmischer Linse mit diffraktiven Strukturen;

**Fig. 5**      Beispiele ophthalmischer Linsen mit diffraktiven Strukturen und reduziertem peripheren Astigmatismus;

**Fig. 6A,B**  eine beispielhafte ophthalmische Linse mit diffraktiven Strukturen, bei welchen die Beugungseffizienz dreier Beugungsordnungen variiert wird;

**Fig. 6C**    beispielhafte Verläufe der Beugungseffizienz unterschiedlicher Beugungsordnungen der diffraktiven Strukturen der in Fig.6A und 6B gezeigten Linse;

**Fig. 7**      Beispiele ophthalmischer Linsen mit angepasster prismatischer Wirkung;

**Fig. 8**      beispielhafte Strahlenverläufe beim Sehen durch eine ophthalmische Linse mit diffraktiven Strukturen und reduziertem peripheren Astigmatismus beim Blick durch den Teil der Linse, in dem der ungewollte Astigmatismus für den Blick in die Ferne durch die diffraktive Struktur wenigstens teilweise kompensiert wurde;

**Fig. 9**      beispielhafte Strahlenverläufe beim Sehen durch eine ophthalmische Linse mit diffraktiven Strukturen und reduziertem peripheren Astigmatismus beim Blick durch den Teil der Linse, in dem der ungewollte Astigmatismus für den Blick in die Nähe durch die diffraktive Struktur wenigstens teilweise kompensiert wurde;

Fig. 10    ein beispielhaftes Gitter, das den Astigmatismus beim Blick in die Ferne zumindest teilweise kompensiert;

Fig. 11    ein beispielhaftes Gitter, das den Astigmatismus beim Blick in die Nähe zumindest teilweise kompensiert;

Fig. 12    eine beispielhafte diffraktive Struktur mit eingezeichneten Gebieten gleichbleibender und sich ändernder Beugungseffizienz;

Fig. 13    Brechkraftverteilung der rein refraktiven Rückfläche einer erfindungsgemäßen Linse;

Fig. 14    Astigmatismusverteilung der rein refraktiven Rückfläche einer erfindungsgemäßen Linse.

In den Figuren werden gleiche Bezugszeichen für die gleichen oder ähnlichen Elemente verwendet. Hinsichtlich der verwendeten Fachterminologie wird ferner insbesondere auf WO 2012/065737 A1 und WO 2012/065738 A1 verwiesen, deren entsprechende Ausführungen insoweit einen integralen Offenbarungsbestandteil der vorlegenden Anmeldung darstellen.

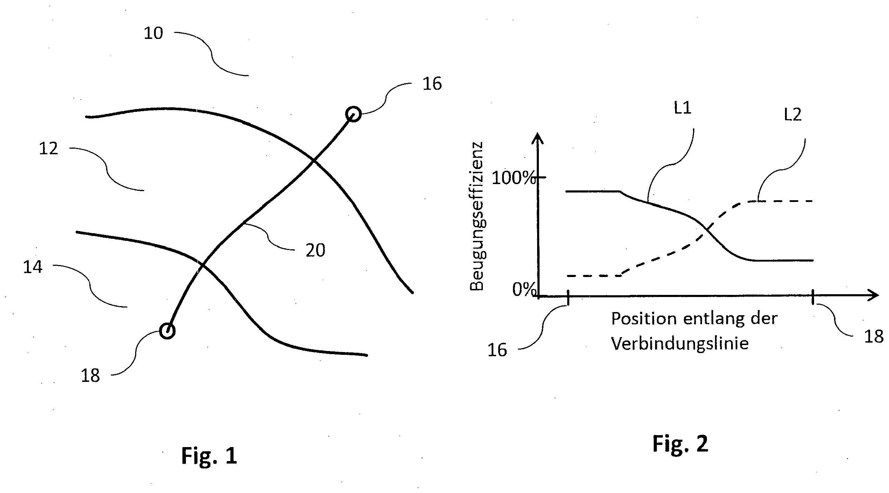

Fig.1 zeigt schematisch die Anordnung unterschiedlicher Bereiche einer beispielhaften Linse mit einer diffraktiven Struktur. Die Linse ( eine progressive Brillenlinse) weist zwei Bereiche bzw. Gebiete 10 und 14 unterschiedlicher Brechkraft auf. Der erste Bereich 10 weist einen ersten Referenzpunkt 16 (z.B. einen Fernbezugspunkt) auf, in welchem die Brechkraft der Linse einen ersten Wert (z.B. den vom Rezept geforderten Wert für das Sehen in die Ferne) hat. Der zweite Bereich 14 weist einen zweiten Referenzpunt 18 auf, in welchem die Brechkraft der Linse einen zweiten Wert (z.B. den vom Rezept geforderten Wert für das Sehen in die Nähe) hat. Zwischen dem ersten und dem zweiten Bereich der Linse ist einen Zwischenbereich 12 angeordnet.

Die Linie 20 verbindet die beiden Referenzpunkte 16 und 18 bzw. die beiden Bereiche 10 und 14. Die Linie 20 kann eine Linie sein, welche die Durchstoßpunkte der Sehstrahlen mit der Vorder- oder Rückfläche der ophthalmischen Linse (d.h. die Durchblickpunkte bzw. Durchblickstellen) bei Blicksenkung von dem ersten zum zweiten Referenzpunkt verbindet. Insofern kann die Linie 20 mit der Hauptblicklinie der ophthalmischen Linse übereinstimmen.

Die Linse umfasst ferner eine diffraktive Struktur. In dem in Fig. 1 gezeigten Beispiel deckt die diffraktive Struktur zumindest Teile des ersten, des zweiten Bereichs und des Zwischenbereichs 12 abdeckt. Es ist jedoch möglich, dass die diffraktive Struktur lediglich Teile des Bereichs 12 und gegebenenfalls Teile des Bereichs 14 abdeckt.

Im ersten Bereich 10 trägt eine erste, n-te Beugungsordnung der diffraktiven Struktur zur Brechkraft der Linse bei. Die Beugungseffizienz $\eta_n$ der n-ten Beugungsordnung weist im Bereich 10 einen hohen Wert auf, z.B. den Wert von im Wesentlichen 100%. Im zweiten Bereich 14 weist die Beugungseffizienz $\eta_n$ der n-ten Beugungsordnung einen niedrigeren Wert auf, z.B. den Wert von im Wesentlichen 0%.

Im Zwischenbereich 12 findet eine Variation der Beugungseffizienz statt. Insbesondere wird im Zwischenbereich 12 die Beugungseffizienz $\eta_n$ der n-ten Beugungsordnung bei stetiger Änderung des Durchblickpunktes entlang der Linie 20 kontinuierlich auf einen niedrigen Wert (z.B. den Wert von im Wesentlichen 0%) überführt.

Eine zweite, m-te Beugungsordnung der diffraktiven Struktur weist den umgekehrten Verlauf der Beugungseffizienz auf: die Beugungseffizienz der m-ten Beugungsordnung im zweiten Bereich 14 weist einen hohen Wert (z.B. im Wesentlichen 100%) und im ersten Bereich 10 einen niedrigeren Wert (z.B. im Wesentlichen 0%) auf. In gleichem Maße, in dem die Beugungseffizienz $\eta_n$ der n-ten Ordnung abnimmt, nimmt die Beugungseffizienz der m-ten Beugungsordnung "m" zu. Die zweite, m-te Ordnung kann optional einen Beitrag zum Brechkraftvektor leisten. Leistet die m-te Ordnung keinen Beitrag zum Brechkraftvektor, so ist ein stetiger Übergang der Beugungseffizienz der n-ten Ordnung $\eta_n$ zu 0% und $\eta_m$ zu 100% gleichbedeutend mit einem stetigen Verschwinden der diffraktiven Struktur.

Wie oben beschrieben kann es sich bei der n-ten Beugungsordnung um die 1. Beugungsordnung handeln und bei der m-ten Beugungsordnung um die 0. Beugungsordnung. In diesem Fall leistet die 0. Beugungsordnung keinen Beitrag zur Brechkraft der Linse. Es ist auch möglich, dass die n-te Beugungsordnung (vgl. Linie L1 in Fig. 2) und die m-te Beugungsordnung (vgl. Linie L2 in Fig. 2) jeweils die (1,0) und die (0,1) Beugungsordnung eines 2-dimensionalen Gitters sind.

Fig. 2 zeigt einen beispielhaften Verlauf der Beugungseffizienz der ersten, n-ten Beugungsordnung (Linie L1) und der zweiten, m-ten Beugungsordnung (Linie L2) entlang der Linie 20.

Die diffraktive Struktur bietet durch die variable Beugungseffizienz einen weiteren Freiheitsgrad, welcher zur Verbesserung von ophthalmischen Linsen benutzt werden kann. Insbesondere ist es möglich, eine neue Art eines kontinuierlichen Übergangs der Brechkraft von einem ersten Referenzpunkt, der einen ersten Brechkraftvektor $(M\_1, J0\_1, J45\_1)$ besitzt, zu einem anderen Referenzpunkt mit einem anderen Brechkraftvektor $(M\_2, J0\_2, J45\_2)$ durchzuführen. Bei diesem Übergang entstehen keine ungewollten Unschärfebereiche oder Verzeichnungen.

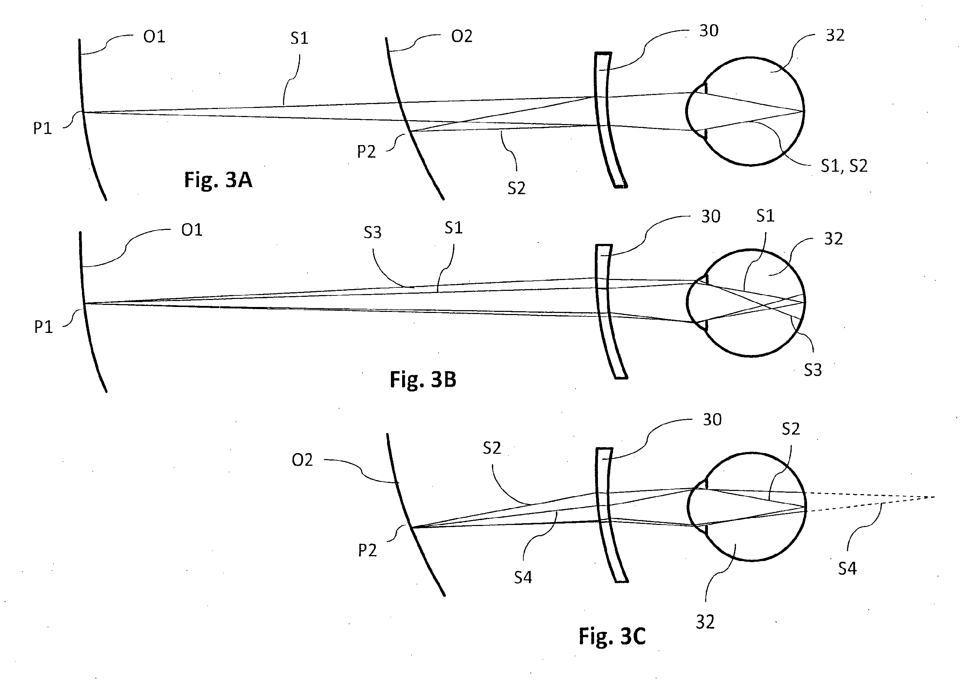

Fig. 3 zeigt einen beispielhaften Strahlenverlauf beim Sehen durch eine beispielhafte ophthalmische Linse mit einer diffraktiven Struktur. Insbesondere zeigen Fig. 3A und 3B eine beispielhafte Zuordnung von mehreren Objektabstandsflächen (hier beispielhaft zwei Objektabstandsflächen O1 und O2) zu derselben Durchblickstelle in einer ophthalmischen Linse 30 mit einer diffraktiven Struktur. Dargestellt werden Strahlenverläufe für Hauptschnitte, in denen die Gesamtbrechkraft für die dargestellten Beugungsordnungen der diffraktiven Struktur dem mittleren sphärischen Äquivalent der Gesamtbrechkraft der jeweiligen Beugungsordnungen entspricht.

Wie in Fig. 3A gezeigt, wird ein Punkt P1 auf der Objektabstandsfläche O1 durch Beugung in eine erste Beugungsordnung (z.B. n-te Beugungsordnung) auf einen Kreis kleinster Verwirrung in der Fovea des Auges 32 abgebildet (Strahlengang S1). Gleichzeitig wird ein Punkt P2 auf einer anderen Objektabstandsfläche O2 durch Beugung in eine andere, zweite Beugungsordnung (z.B. m-te Beugungsordnung) ebenfalls auf einen Kreis kleinster Verwirrung in der Fovea des Auges 32 abgebildet (Strahlengang S2). Die Kreise kleinster Verwirrung der abgebildeten Punkten P1 und P2 überlappen weitgehend miteinander. Es entstehen somit gleichzeitig eine scharfe Abbildung des ersten Punkts P1 durch die erste Beugungsordnung und eine scharfe Abbildung des zweiten Punkts P1 durch die zweite Beugungsordnung.

Wie in **Fig. 3B** ge zeigt, tritt gleichzeitig neben der Abbildung des Objektpunkts P1 der Objektabstahdsfläche O1 auf einen Kreis kleinster Verwirrung in der Fovea des Auges 32 durch die erste Beugungsordnung (Strahlengang S1) eine unscharfe und kontrastmindernde Abbildung dieses Punkts durch die zweite Beugungsordnung (Strahlengang S3) auf die Netzhaut des Auges 32 auf. Ferner, wie in **Fig. 3C** gezeigt, tritt gleichzeitig neben der Abbildung eines Objektpunkts P2 der Objektabstandsfläche O2 auf einen Kreis kleinster Verwirrung in der Fovea des Auges 32 durch die zweite Beugungsordnung (Strahlengang S2) eine unscharfe und kontrastmindernde Abbildung durch die erste Beugungsordnung (Strahlengang S4) auf die Netzhaut des Auges 32 auf.

Wie aus Fig. 3 ersichtlich, kann bei einem festen Durchblickpunkt bzw. bei einer festen Durchblickstelle bei mehreren Objektabständen zumindest eine scharfe Abbildung entstehen. Wenn alle Beugungsordnungen mit im Wesentlichen von Null verschiedener Beugungseffizienz gemeinsam betrachtet werden, ist die Objektabstandsfläche folglich keine Funktion wie bei herkömmlichen refraktiven Linsen, sondern eine Relation, da bei einem festen Durchblickpunkt bei mehreren Objektabständen zumindest eine scharfe Abbildung entstehen kann.

Das durch den Träger einer solchen ophthalmischen Linse bei fester Akkommodation wahrgenommene und auf die Netzhaut scharf abgebildete Bild, das durch das in die n-te Beugungsordnung gebeugte Licht entsteht, verliert mit fallender Beugungseffizienz eta_n an Intensität. Gleichzeitig wächst die Intensität eines unscharfen Bildes, wobei die Unschärfe sowohl durch Aberrationen zweiter Ordnung (Defocus und/oder Astigmatismus) als auch Aberrationen höherer Ordnung (Koma, Trefoil, Sphärische Aberration, etc.) bedingt ist. Als Seheindruck ergibt sich deshalb bei fester Akkommodation und einer Blickauslenkung zwischen dem ersten und zweiten Referenzpunkt bzw. zwischen dem ersten und dem zweiten Bereich unterschiedlicher Brechkräfte eine stetige Kontrastabnahme des scharf abgebildeten Bildes. Die Minderung des Kontrasts wird jedoch als wesentlich weniger störend empfunden als z.B. die durch ungewollten Astigmatismus verursachte Unschärfe, sodass die Bereiche, in denen die ophthalmische Linse eine für ihren Träger als gut befundene Abbildung liefert, relativ groß sind.

Da es bei der oben beschriebenen stetigen Überführung des diffraktiven Brechkraftanteils zwischen zwei Punkten bzw. Bereichen unterschiedlicher Brechkräfte nicht nötig ist, Brechkraftvektoren jedes Bereichs komponentenweise ineinander stetig überzuführen, werden durch die Kombination einer diffraktiven Struktur gemäß dem obigen Beispiel mit einer refraktiven Struktur keine zusätzlichen Bereiche ungewollten Astigmatismus eingeführt. Dadurch lässt sich ein neuartiger Übergang der Brechkraft zwischen zwei Bereichen mit unterschiedlichen Brechkraftvektoren verwirklichen, der bei der Gestaltung von ophthalmischen Linsen eingesetzt werden kann, um Unschärfebereiche, Verzeichnungen oder deutliche prismatischen Sprünge zu vermeiden.

In den folgenden Beispielen werden unterschiedliche Anwendungen des oben beschriebenen, neuartigen Übergangs der Brechkraft zwischen zwei Bereiche unterschiedlicher Brechkraft beschrieben. Insbesondere kann der vorgeschlagene Übergang dazu verwendet werden, deutliche prismatische Sprünge und/oder ungewollte Unschärfebereiche und Verzeichnungen komplett zu vermeiden oder (erheblich) zu reduzieren.

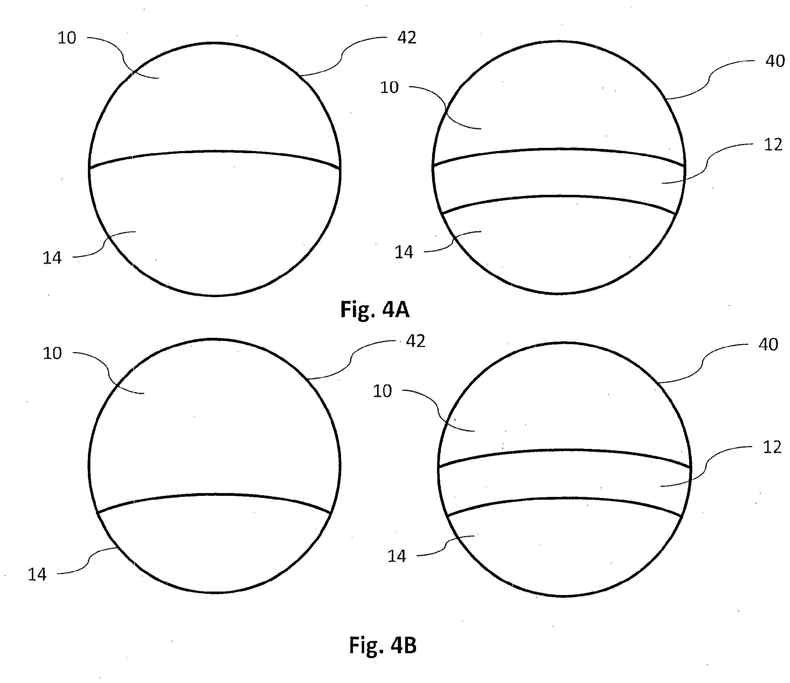

**Fig. 4** zeigt Beispiele ophthalmischer Linsen mit diffraktiven Strukturen, wobei **Fig. 4A** eine ophthalmische Linse zeigt, bei welcher die diffraktive Struktur im oberen Teil der Linse angeordnet ist und **Fig. 4B** eine ophthalmische Linse, bei welcher die diffraktive Struktur im unteren Teil der Linse angeordnet ist.

In den Figuren 4A und 4B wird links jeweils eine ophthalmische Linse 42 zur Presbyopiekorrektur mit zwei Bereichen 10 und 14 unterschiedlicher Brechkraft gezeigt. Der erste Bereich weist eine rein refraktive Brechkraft auf. Der zweite Bereich weist sowohl eine refraktive als auch eine diffraktive Brechkraft auf. Rechts in den Figuren 4A und 4B wird eine ophthalmische Linse 40 gezeigt, wobei die beiden Bereiche 10 und 14 unterschiedlicher Brechkraft an einen weiteren Bereich 12 angrenzen, in welchem ein Übergang zwischen den Brechkräften der beiden Bereiche 10 und 14 stattfindet.

Bei den in Fig. 4A und 4B gezeigten ophthalmischen Linsen weist die diffraktive Struktur zwei Beugungsordnungen "n" und "m" mit variabler Beugungseffizienz auf. Bei den n-ten und m-ten Beugungsordnungen kann es sich jeweils um die 1. und 0. Beugungsordnung handeln. Die 0. Beugungsordnung besitzt dabei keinen Beitrag zum Brechkraftvektor der Linse. Die 1. Beugungsordnung besitzt einen konstanten von der Durchblickstelle unabhängigen Brechkraftbeitrag.

Die zwei Bereiche 10 und 12 unterschiedlicher Brechkraft, in denen jeweils die 1. bzw. die 0. Beugungsordnung im Wesentlichen 100% Beugungseffizienz aufweisen, grenzen beide an den Bereich 14, in dem ein kontinuierlicher Übergang der Beugungseffizienz der beiden Beugungsordnungen zwischen im Wesentlichen 0% und 100% stattfindet. In dem Bereich, in dem die Beugungseffizienz der 0. Ordnung im Wesentlichen 100% beträgt, beträgt der diffraktive Brechkraftanteil (0,0,0).

Die Objektabstandsfläche bei diesen Beispielen ist keine Funktion des Durchblickpunkts, sondern eine Relation, da bei einem Durchblickpunkt Objekte in zwei Entfernungen scharf abgebildet werden (vgl. Fig. 3).

Typischerweise befindet sich der Bereich, der insgesamt eine höhere Brechkraft besitzt und zum Sehen in die Nähe geeignet ist, im unteren Teil der ophthalmischen Linse. Der Bereich mit geringerem sphärischem Äquivalent befindet sich im oberen Teil der ophthalmischen Linse und kann zum Sehen in die Ferne benutzt werden. Eine andere Anordnung der beiden Bereiche ist ebenfalls möglich. Unabhängig von der Anordnung kann die diffraktive Struktur einen positiven oder einen negativen Beitrag zum mittleren sphärischen Äquivalent leisten, sodass sich in verschiedenen Ausführungsformen die diffraktive Struktur sowohl im oberen Teil der ophthalmischen Linse (siehe Fig. 4A) als auch im unteren Teil der ophthalmischen Linse befinden kann (siehe Fig. 4B).

In einem anderen Beispiel kann es sich bei der n-ten und m-ten Beugungsordnung jeweils um von 0 verschiedene Beugungsordnungen handeln. Eine solche ophthalmische Linse weist analog zu der in Fig. 4 gezeigten ophthalmischen Linse zwei Bereich mit unterschiedlichen Brechkraftvektoren auf, in denen jeweils die Beugungseffizienz genau einer Ordnung im Wesentlichen 100% ist, und die an einen Bereich grenzen, in dem ein stetiger Übergang der Beugungseffizienzen der beiden Beugungsordnungen erfolgt. Die diffraktive Struktur in diesem Fall kann sich über die gesamte Oberfläche der ophthalmischen Linse erstrecken. Durch den zusätzlichen diffraktiven Brechkraftanteil der diffraktiven Struktur kann die ophthalmische Linse dünner gebaut werden.

In den obigen Beispielen kann die refraktive Brechkraft der Linse konstant innerhalb aller drei Bereiche sein. Die notwendige Zunahme der Brechkraft der Linse kann allein durch die diffraktive Struktur erfolgen.

Es ist jedoch ebenfalls möglich in einer ophthalmischen Linse, einen kontinuierlichen refraktiven Brechwertverlauf zu verwirklichen, und somit eine scharfe Abbildung in einem kontinuierlichen Bereich von Objektabständen zu ermöglichen. Durch die diffraktive Struktur kann gleichzeitig die Stärke der peripher auftretenden ungewollten Unschärfebereiche vermindert werden. So kann der refraktive Brechkraftanteil des für das Sehen in die Nähe ausgelegten Bereichs der ophthalmischen Linse niedriger als bei einer rein refraktiven Linse gestaltet werden. Die fehlende sphärische Wirkung wird durch eine diffraktive Struktur erzeugt, welche sich in dem für das Sehen in die Nähe ausgelegten Bereichs der Linse befindet. Die Beugungseffizienz der die zusätzliche Wirkung erzeugenden Ordnung kann zum Rand der diffraktiven Struktur hin auf einen kleinen Wert, vorzugsweise auf den Wert 0% abnehmen, so dass es zu keinem zusätzlichen Astigmatismus in der Peripherie der Linse kommt. Da der Unterschied des sphärischen Anteils der refraktiven Brechkraft zwischen den beiden Referenzpunkten kleiner ist als bei einer herkömmlichen rein refraktiven Linse, ist ebenfalls die Stärke des peripheren ungewollten Astigmatismus kleiner als bei einer rein refraktiven Linse mit der gleichen Brechkraft.

Über das Vermeiden von Unschärfen und prismatischen Sprüngen hinaus kann der oben dargestellte Übergang zwischen Bereichen unterschiedlicher Brechkraft ebenfalls dazu benutzt werden, um bereits vorhandenen ungewollten Astigmatismus wenigstens teilweise zu kompensieren. Eine solche Ausgestaltung ist insbesondere in dem Falle eines kontinuierlichen refraktiven Brechwertverlaufs von Vorteil. Durch den kontinuierlichen Verlauf der refraktiven Brechkraft entsteht unweigerlich peripherer Astigmatismus, welcher mittels diffraktiven Strukturen reduziert bzw. zumindest teilweise kompensiert werden kann. Gleichzeitig können Nachteile der diffraktiven Strukturen wie z.B. auftretendes Streulicht oder Nebenbilder in den hauptsächlich genutzten Bereichen der ophthalmischen Linse vermieden werden.

Um den unerwünschten Astigmatismus zumindest teilweise zu kompensieren, wird wenigstens ein Teil der diffraktiven Struktur so auf der ophthalmischen Linse platziert, dass er im Wesentlichen Durchblickstellen abdeckt, in denen die refraktive Brechkraft einen relativ hohen peripheren Astigmatismus aufweist. Vorzugsweise wird gleichzeitig die Position der diffraktiven Struktur derart gewählt, dass sie sich nicht in die hauptsächlich zum Sehen benutzten Gebiete der Linse erstreckt, und dort auch nicht zur ungewollten Verschlechterung des Seheindrucks durch Nebenbilder oder Streulicht führt. Die diffraktive Struktur kann z.B. in den Bereichen der ophthalmischen Linse (z.B. einer progressiven Linse) angeordnet werden, in welchen der unerwünschte Astigmatismus größer als 0,5; 0,75; 1,0 dpt oder als einen anderen vorgegebenen Schwellenwert ist.

Die diffraktive Struktur weist einen astigmatischen Brechkraftanteil auf, welcher den unerwünschten Astigmatismus der refraktiven Struktur wenigstens teilweise kompensiert. Die diffraktiven und refraktiven Brechkraftanteile ergeben zusammen eine kombinierte Brechkraft, deren ungewollter Astigmatismus kleiner ist als dies bei einer rein refraktiven ophthalmischen Linse der Fall ist. Die Phasenfunktion einer solchen diffraktiven Struktur ist eine nicht rotationssymmetrische Phasenfunktion.

Die Periodizität der diffraktiven Struktur kann derart gewählt werden, dass sie eine konstante oder eine nicht konstante diffraktive Brechkraft besitzt. Diffraktive Strukturen mit konstanter Brechkraft sind in der Regel leichter herzustellen, bieten jedoch weniger Freiheitsgrade bei der Korrektur des unerwünschten Astigmatismus. Diffraktive Strukturen mit einer nicht konstanten Brechkraft ermöglichen eine bessere Kompensation des Astigmatismus der refraktiven Struktur, da abhängig von der Durchblickstelle eine unterschiedliche diffraktive Wirkung zur vollständigen oder wenigstens teilweisen Kompensation des refraktiven Astigmatismus nötig sein kann. Dabei können Achslage und/oder Betrag des Astigmatismus des diffraktiven Brechkraftanteils variiert werden.

Um zusätzliche Unschärfebereiche zu vermeiden, kann die diffraktive Struktur zu ihrem Rand hin kontinuierliche Übergänge der Beugungseffizienz der die diffraktive astigmatische Brechkraft erzeugenden Beugungsordnung aufweisen, wie z.B. oben beschrieben.

Gemäß einem Beispiel kann eine Kompensation des Astigmatismus mit zwei zueinander senkrecht stehenden, von der 0. Beugungsordnung verschiedenen Beugungsordnungen erfolgen. Da die Hauptschnitte stärkster bzw. schwächster Krümmung der durch die ophthalmische Linse tretenden Wellenfront, welche durch die rein refraktive Wirkung erzeugt wurden, im Wesentlichen senkrecht zueinander stehen, erlaubt es eine Kompensation mit zwei senkrecht zueinander stehenden Beugungsordnungen, an derselben Durchblickstelle den Astigmatismus für zwei unterschiedliche Objektabstände (z.B. für den Blick in die Ferne und den Blick in die Nähe) zu kompensieren.

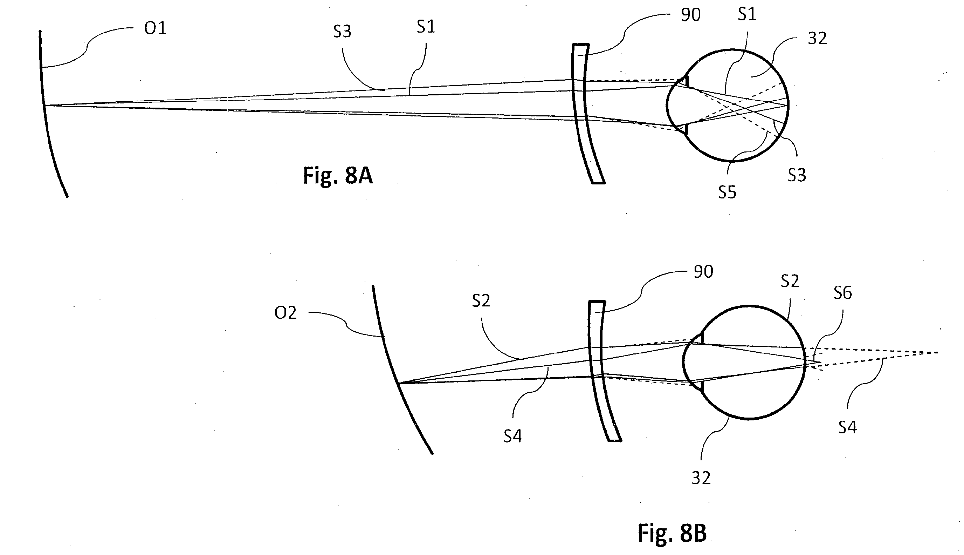

So kann der Astigmatismus für eine Objektentfernung (z.B. für das Sehen in die Nähe) ganz oder teilweise mittels der durch einer der beiden Beugungsordnungen erzeugten diffraktiven Brechkraft erfolgen. Diese Beugungsordnung (z.B. die Ordnung (1,0)) kann eine diffraktive Wirkung bzw. Brechkraft erzeugen, welche die Krümmung der Wellenfront im schwächer gekrümmten Hauptschnitt an die Krümmung der Wellenfront im stärker gekrümmten Hauptschnitt angleicht, sodass z.B. scharfes Sehen in diese Objektentfernung möglich ist. Im selben Durchblickpunkt bewirkt die diffraktive Wirkung der anderen Beugungsordnung (z.B. der Ordnung (0,1)), dass die Krümmung im stärker gekrümmten Hauptschnitt an die Krümmung im schwächer gekrümmten Hauptschnitt angeglichen wird, sodass ebenfalls scharfes Sehen in einer anderen Objektentfernung möglich ist, z.B. für Objekte in der Ferne, wie in Fig. 3 und 8 gezeigt.

Die oben beschriebene Korrektur der Hauptschnitte der durch die ophthalmische Linse tretenden Wellenfront bezieht sich auf ophthalmische Linsen, die insgesamt eine sphärische Wirkung in den beiden Bereichen unterschiedlicher Brechkraft (z.B. im Fern- und Nahteil) aufweisen. In gleicher Weise kann eine entsprechende Anpassung der Krümmungen für eine ophthalmische Linse mit astigmatischen Verordnungen für die Ferne und Nähe vorgenommen werden, wobei sich die astigmatischen Verordnungen gegebenenfalls in Achse und/oder Betrag des Astigmatismus unterscheidenden können.

Die auf oder in einer erfindungsgemäßen ophthalmischen Linse vorhandene diffraktive Struktur weist in dem Bereich, in dem ungewollter refraktiver Astigmatismus simultan für zwei Objektabstände kompensiert wird, eine Phasenfunktion auf, welche sich erheblich von den Phasenfunktionen herkömmlich bei Linsen verwendeter diffraktiver Elementen unterscheidet. Insbesondere weist die Phasenfunktion Stufen auf, die im Wesentlichen der Form von Rauten, Quadraten oder Rechtecken ähneln und die gegebenenfalls deformiert sind. Die Unstetigkeiten der Phasenfunktion weisen somit die Form eines gegebenenfalls verzerrten 2-dimensionalen Gitters auf. Eine solche diffraktive Struktur unterscheidet sich erheblich von den bei gewöhnlichen in ophthalmischen Linsen verwendeten diffraktiven Elementen, deren Phasenfunktion in der Regel langgezogene streifenartigen Stufen aufweist und ringförmige Bereiche zwischen den Unstetigkeiten besitzt.

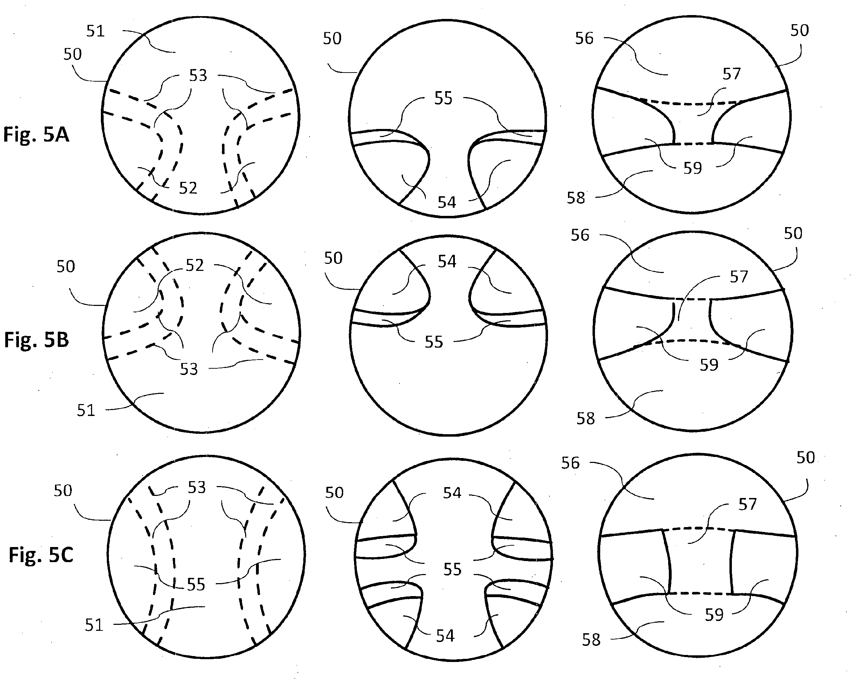

**Fig. 5** zeigt Beispiele ophthalmischer Linsen (z.B. progressive Brillenlinsen) mit diffraktiven Strukturen, die zur Kompensation des ungewollten Astigmatismus der Linsen ausgelegt sind, wobei **Fig. 5A** eine für das Sehen in die Ferne ausgelegte Linse, **Fig. 5B** eine für das Sehen in die Nähe ausgelegte Linse und **Fig. 5C** eine für das Sehen in mittlere Entfernungen ausgelegte ophthalmische Linse zeigt. Die linke Spalte in Fig. 5 zeigt jeweils eine beispielhafte Anordnung der Bereiche der refraktiven Brechkraft der ophthalmischen Linse; die mittlere Spalte zeigt eine beispielhafte Anordnung der diffraktiven Strukturen und die rechte Spalte die Darstellung der Gebiete der ophthalmischen Linse, in denen scharfes Sehen in wenigstens einer der Beugungsordnungen und bei wenigstens einer Objektentfernung möglich ist.

Bei der in **Fig. 5A** gezeigten ophthalmischen Linse 50, handelt es sich um eine Linse, welche für das Sehen in die Ferne ausgelegt ist. Der dafür vorgesehene Fernteil der Linse weist einen besonders großen im Wesentlichen astigmatismusfreien Bereich 51 auf. In diesem im Wesentlichen astigmatismusfreien Bereich 51 ist allein mit Hilfe der refraktiven Brechkraft der ophthalmischen Linse ein scharfes Sehen von fernen Objekten möglich. Der Bereich 51 ist vorzugsweise frei von diffraktiven Strukturen. In den Bereichen 52 links und rechts des Bereichs 51 treten durch peripheren ungewollten Astigmatismus verursachte Unschärfen auf. Der auftretende periphere ungewollte Astigmatismus wird beispielhaft durch die Isoastigmatismuslinien 53 dargestellt. Zum Beispiel kann die Isoastigmatismuslinie 0,5 dpt (oder 0,75 dpt oder 1,0 dpt) den Bereich guter Sicht 51 von den Bereichen mit ungewolltem peripherem Astigmatismus 52 trennen.

In der Mitte der Fig. 5A ist eine beispielhafte Anordnung zweier diffraktiver Strukturen auf oder in der ophthalmischen Linse 50 dargestellt. In diesem Beispiel befinden sich die zwei diffraktiven Strukturen jeweils hauptsächlich im zum Sehen in die Nähe ausgelegten unteren Bereich der Linse in den Bereichen 54 und 55. Die Beugungseffizienz in den Bereichen 54 ist annähernd konstant, ein Verlauf der Beugungseffizienz zweier Beugungsordnungen zwischen Punkten mit unterschiedlicher Brechkraft findet lediglich in den Bereichen 55 statt. Die diffraktiven Strukturen sind - wie oben beschrieben ausgelegt - wenigstens teilweise den ungewollten peripheren Astigmatismus des refraktiven Brechkraftanteils zu kompensieren. An den Durchblickpunkten, an denen der periphere Astigmatismus für das Sehen in die Nähe kompensiert wurde, ist scharfes Sehen naher Objekte bei vermindertem Kontrast möglich, ferne Objekte werden unscharf dargestellt (siehe z.B. Fig. 8).

In der rechten Abbildung in Fig. 5A werden schematisch die Bereiche in der ophthalmischen Linse 50 gezeigt, in denen scharfes Sehen in wenigstens einer der Beugungsordnungen und bei wenigstens einer Objektentfernung möglich ist. In den Bereichen 56, 57 und 58 ist jeweils eine weitgehend astigmatismusfreie Sicht in die Ferne (Bereich 56), in die Nähe (Bereich 58) und in mittlere Entfernungen (Bereich 57) möglich. Die Bereiche 59 stellen Bereiche mit ungenügend scharfer Abbildung dar, in welchen der periphere Astigmatismus höher als ein vorgegebener Schwellenwert ist.

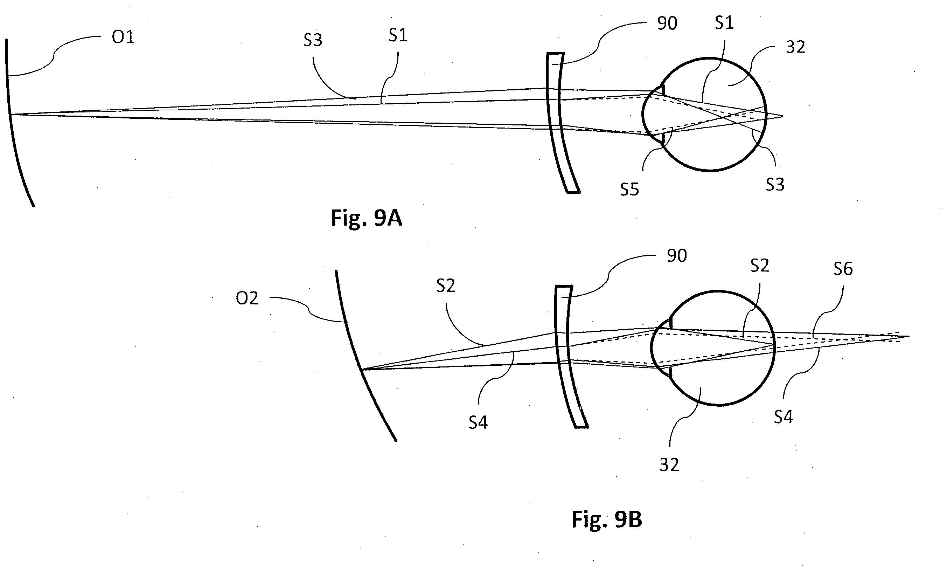

Bei einer hauptsächlich zum Sehen in die Nähe ausgelegten ophthalmischen Linse kann umgekehrt der refraktive Brechkraftverlauf so gewählt werden, dass der zum Sehen in die Nähe vorgesehene Nahteil einen besonders großen im Wesentlichen astigmatismusfreien Bereich 51 aufweist (vgl. **Fig. 5B,** Links). Durch zwei diffraktive Strukturen, die im Fernteil der Linse angeordnet sind (vgl. Fig. 5B, Mitte), wird der dort vorhandene ungewollte Astigmatismus des refraktiven Brechkraftanteils wenigstens teilweise kompensiert. Wie in der rechten Abbildung in Fig. 5B gezeigt, ist an den Durchblickpunkten, an denen der periphere Astigmatismus für das Sehen in die Ferne kompensiert wird, scharfes Sehen ferner Objekte bei vermindertem Kontrast möglich, ferne Objekte werden unscharf dargestellt (vgl. z.B. Fig. 9).

Bei einer ophthalmische Linse, die einen besonders großen Bereich aufweisen soll, mit dem Objekte in mittleren Entfernungen gesehen werden sollen, kann entsprechend ein refraktiver Brechkraftverlauf gewählt werden, der einen besonders breiten Bereich zum Sehen in mittlere Entfernungen aufweist (vgl. **Fig. 5C,** Links). Zwar steigt entsprechend der ungewollte Astigmatismus sowohl in dem zum Sehen in die Ferne als auch in dem zum Sehen in die Nähe ausgelegten Bereich, dieser kann jedoch mit vier diffraktiven Strukturen, die im mittleren Teil der Linse angeordnet sind (vgl. Fig. 5C, Mitte) wenigstens teilweise kompensiert werden. In einer solchen ophthalmischen Linse gibt es Durchblickstellen, bei der scharfes Sehen in der Ferne bzw. in der Nähe unter Kontrastverlust möglich ist (vgl. Fig. 8 und 9). Somit kann sowohl den Nahbereich als auch der Fernbereich vergrößert werden (vgl. die rechte Abbildung in Fig. 5C).

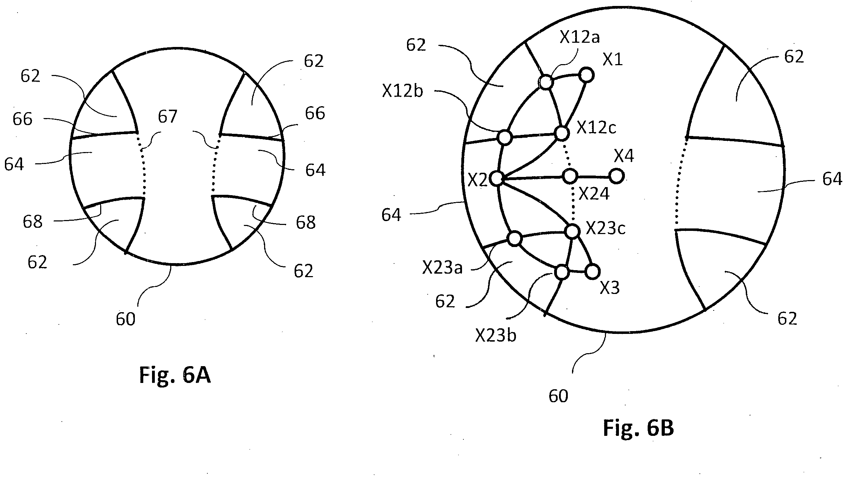

in einer weiteren Abwandlung der in Fig. 5C gezeigten ophthalmischen Linse wird ein Übergang zwischen der Brechkraft im Fernteil und im Nahteil eines Glases mit Hilfe je einer diffraktiven Struktur links und rechts des für Sehen in mittlere Entfernungen vorgesehenen Teils der ophthalmischen Linse erzeugt. Dazu wird in den Gebieten, in denen ein Übergang stattfindet, die Beugungseffizienz dreier Beugungsordnungen variiert. **Fig. 6A und 6B** zeigen eine beispielhafte ophthalmische Linse 60 mit diffraktiven Strukturen, bei welchen die Beugungseffizienz dreier Beugungsordnungen variiert wird.

In den Gebieten 62 und 64 wird der durch den refraktiven Brechwertverlauf verursachte refraktive ungewollte Astigmatismus wenigstens teilweise kompensiert. Dabei ist die Beugungseffizienz im Gebiet 62 annähernd konstant, und der Verlauf zwischen Punkten mit unterschiedlicher Brechkraft findet im Gebiet 64 mit Hilfe dreier Beugungsordnungen statt. Dieser Übergang ist derart gestaltet, dass zumindest in einem Bereich der Linien 66, 67 und 68 die Beugungseffizienz jeweils einer der Beugungsordnungen im Wesentlichen 100% ist. An Punkten, an denen zwei der Linien 66, 67 und 68 aneinandergrenzen, ist die Beugungseffizienz jeweils einer der entsprechenden Beugungsordnungen im Wesentlichen 0%.

So kann z.B. eine den Astigmatismus im Fernteil kompensierende Beugungsordnung (z.B. n-te Beugungsordnung) im Fernteil der ophthalmischen Linse eine Beugungseffizienz von im Wesentlichen 100% aufweisen und sowohl bei Blickauslenkung zum Nahteil als auch bei Blickauslenkung zum Zwischenbereich auf im Wesentlichen 0% abfallen. Umgekehrt gilt das gleiche für die den Astigmatismus im Nahteil kompensierende Beugungsordnung (z.B. m-te Beugungsordnung), deren Beugungseffizienz bei Blickauslenkung zum Fernteil bzw. zum Zwischenbereich von im Wesentlichen 100% auf im Wesentlichen 0% abfällt. Die dritte Beugungsordnung (z.B. die k-te Beugungsordnung, die z.B. die 0. Beugungsordnung sein kann) weist an der Grenze zwischen der diffraktiven Struktur und dem Zwischenbereich eine Beugungseffizienz von im Wesentlichen 100%, welche in Richtung Peripherie des Glases auf im Wesentlichen 0% abfällt. Die beiden den Astigmatismus im Nahteil bzw. Fernteil kompensierenden Beugungsordnungen können dabei identisch sein (z.B. die 1. Beugungsordnung), oder aber auch unterschiedlich sein (z.B. die Ordnungen (1,0) und (0,1) einer diffraktiven Struktur, welche in zwei zueinander senkrechte Richtungen Beugungsmaxima erzeugt).

**Fig. 6B** zeigt Durchblickpunkte X1, X2, X3, X4, X12a, X12b, X12c, X23a, X23b, X23c auf der ophtalmischen Linse in den unterschiedlichen Gebieten. Insbesondere bezeichnen:

- X12a und X23b Punkte, in denen die prismatische Wirkung zwischen einem Gebiet rein refraktiver Brechkraft und einem Gebiet refraktiver und diffraktiver Brechkraft angepasst wird, und
- X12b, X23a und X24 Punkte, in denen ein oben beschriebener stetiger Übergang zwischen Gebieten mir rein refraktiver Brechkraft und Gebieten mit refraktiver und diffraktiver Brechkraft stattfindet.

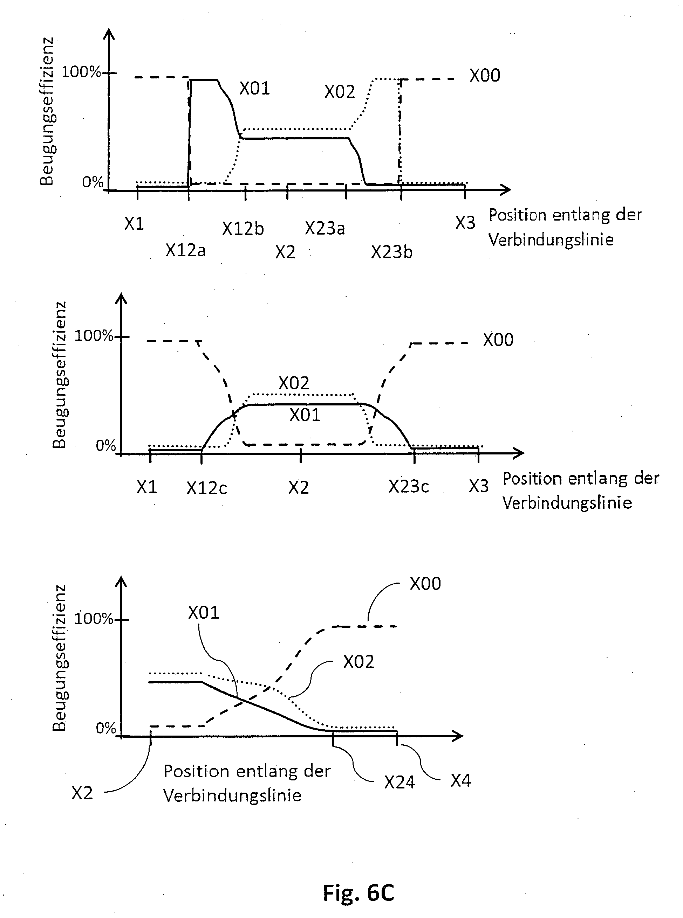

**Fig. 6C** zeigt beispielhafte Verläufe der Beugungseffizienz der unterschiedlichen Beugungsordnungen als Funktion der Position entlang der jeweiligen Verbindungslinien, wobei die gestrichelte Linie X00 die 0. Beugungsordnung, die durchgezogene Linie X01 die (1,0) Beugungsordnung und die punktierte Linie X02 die (0,1) Beugungsordnung bezeichnen.

Bei einer weiteren beispielhaften ophthalmischen Linse kann eine Anpassung der prismatischen Wirkung der ophthalmischen Linse an der Grenze zwischen einem Gebiet mit rein refraktiver Brechkraft und einem Gebiet mit diffraktiver und gegebenenfalls refraktiver Brechkraft vorgenommen werden. Die Anpassung kann mit dem Ziel erfolgen, einen stetigen Verlauf sowohl des horizontalen als auch des vertikalen Prismas (d.h. der beiden Komponenten des Gesamtprismas) entlang der Grenze der unterschiedlichen Gebiete zu erreichen. Dadurch können Bildsprünge beim Schweifen des Blickes zwischen den Gebieten reiner refraktiver Brechkraft und Gebieten mit diffraktiver und gegebenenfalls refraktiver vermieden oder reduziert werden. Die Anpassung der prismatischen Wirkung bzw. des Gesamtprismas der Linse kann für eine Beugungsordnung erfolgen. Alternative kann die Anpassung für eine in geeigneter Weise mit der Beugungseffizienz gewichtete und über mehrere Beugungsordnungen gemittelte prismatische Wirkung erfolgen.

Die Anpassung der prismatischen Wirkung kann dabei unabhängig vom Verlauf der Beugungseffizienz erfolgen. Eine Anpassung der prismatischen Wirkung ist besonders vorteilhaft, wenn die diffraktive Struktur an zumindest einem Teil ihres Randes eine Beugungseffizienz nahe 100% aufweist und mit diesem Rand an ein Gebiet mir rein refraktiver Brechkraft grenzt. Eine Anpassung der prismatischen Wirkung kann entlang des gesamten Randes der diffraktiven Struktur erfolgen. Es ist jedoch möglich, die Anpassung der prismatischen Wirkung an nur einem Teil des Randes der diffraktiven Struktur vorzunehmen. An einem anderen Teil des Randes der diffraktiven Struktur kann absichtlich von einer Anpassung der prismatischen Wirkung abgesehen werden, um ungewollte astigmatische Bereiche zu vermeiden.

Die Anpassung der prismatischen Wirkung kann z.B. dadurch erfolgen, dass die prismatische Wirkung der refraktiven Struktur zum Rand hin abnimmt oder verschwindet. Eine andere Möglichkeit besteht darin, eine Unstetigkeit der prismatischen Wirkung durch die refraktive Struktur der ophthalmischen Linse zuzulassen. Diese Unstetigkeit kann eine durch die diffraktive Struktur verursachte Unstetigkeit der prismatischen Wirkung an einem Teil ihres Randes im Wesentlichen kompensieren, sodass sich ein stetiger Verlauf des gesamten Prismas ergibt. Eine Unstetigkeit der prismatischen Wirkung durch die refraktive Struktur bzw. durch den refraktiven Teil der Linse kann auf der Vorder und/oder Rückseite der ophthalmischen Linse erfolgen.

Bei allen oben beschriebenen beispielhaften ophthalmischen Linsen kann zusätzlich eine Anpassung der prismatischen Wirkung der Linse an der Grenze zwischen jeweils einem der Gebiete mit refraktiver und diffraktiver Brechkraft und den angrenzenden Gebieten mit rein refraktiver Brechkraft und geringem Astigmatismus erfolgen. Gleichzeitig ist die Beugungseffizienz der den Astigmatismus kompensierenden Beugungsordnung an der Grenze zwischen beiden Gebieten im Wesentlichen 100%. An den verbleibenden Rändern des Gebiets mit refraktiver und diffraktiver Brechkraft wird eine Anpassung der prismatischen Wirkung nicht angestrebt, stattdessen nimmt die Beugungseffizienz der den Astigmatismus kompensierenden Beugungsordnung auf im Wesentlichen 0% ab.

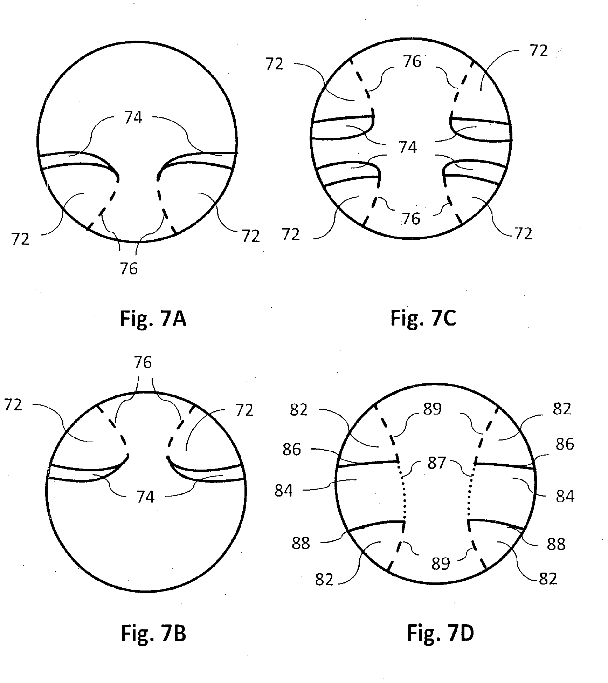

**Fig. 7** zeigt eine beispielhafte Anordnung der diffraktiven Strukturen in drei unterschiedlichen ophthalmischen Linsen 70 mit angepasster prismatischer Wirkung. Dabei zeigen **Fig. 7A** eine ophthalmische Linse mit einem breiten Fernteil, welche ähnlich der in Fig. 5A gezeigten Linse ist; **Fig. 7B** eine ophthalmische Linse mit einem breiten Nahteil, welche ähnlich der in Fig. 5B gezeigten Linse ist; **Fig. 7C** eine ophthalmische Linse mit einem breiten mittleren Teil, welche ähnlich der in Fig. 5C gezeigten Linse ist und **Fig. 7D** eine ophthalmische Linse, welche ähnlich der in Fig. 6 gezeigten Linse ist.

In den Bereichen 72 und 74 bzw. 84 der ophthalmischen Linse wird der durch den refraktiven Brechwertverlauf verursachte refraktive ungewollte Astigmatismus wie oben beschrieben mittels geeignet ausgelegten diffraktiven Strukturen wenigstens teilweise kompensiert. Dabei ist die Beugungseffizienz im Bereich 72 annähernd konstant. Der Verlauf der Beugungseffizienz zwischen Punkten mit unterschiedlicher Brechkraft findet im Gebiet 74 bzw. 84 statt. In den Gebieten 74 findet ein Übergang mit Hilfe zweier Beugungsordnungen statt, wie oben erläutert. In den Gebieten 84 werden für den Übergang drei Beugungsordnungen benutzt, wobei zumindest in einem Bereich der Linien 86, 87 und 88 die Beugungseffizienz jeweils einer anderen Beugungsordnung nahezu 100% ist. An Punkten, an denen zwei der Linien 86, 87 und 88 aneinandergrenzen, ist die Beugungseffizienz jeweils einer der entsprechenden Beugungsordnungen im Wesentlichen 0%. Zusätzlich verfügen die diffraktiven Strukturen über einen Rand bzw. Ränder 76 bzw. 89, an dem - wie oben beschrieben - ein Angleich der prismatischen Wirkungen stattfindet.

Ebenfalls ist es möglich, eine Anpassung der prismatischen Wirkung auch bei ophthalmischen Linsen ohne Korrektur des peripheren Astigmatismus (wie z.B. die in Fig. 4 gezeigten Linsen) durchzuführen. Bei diesen Linsen kann sich der Bereich mit sowohl refraktiver als auch diffraktiver Brechkraft zwischen zwei Bereichen mit rein refraktiver Brechkraft befinden, welche für das Sehen in die Ferne bzw. in die Nähe ausgelegt sind. Zwischen einem dieser refraktiven Bereiche und dem hybriden Bereich wird die prismatische Wirkung derart angepasst, dass Bildsprünge vermieden werden. Zwischen dem anderen rein refraktiven Bereich und dem hybriden Bereich findet der oben beschriebene kontinuierliche Abfall der Beugungseffizienz zumindest einer Beugungsordnung statt. Insgesamt steht so dem Träger einer solchen ophthalmischen Linse eine größere Fläche ohne störende Nebenbilder oder Streulicht zur Verfügung.

**Fig. 8** zeigt schematisch die Strahlenverläufe für zwei Beugungsordnungen für Hauptschnitte kleinster und größter Brechkraft beim Blick durch ein Gebiet einer ophthalmischen Linse 90, in welchem der ungewollte refraktive Astigmatismus beim Blick in die Ferne kompensiert wurde. **Fig. 8A** zeigt die Strahlverläufe beim Blick in die Ferne und **Fig. 8B** beim Blick in die Nähe.

Wie in Fig. 8A gezeigt, entsteht beim Blick auf ein fernes Objekt in bzw. auf der Objektabstandsfläche O1 durch den Strahlenverlauf S1 einer ersten Beugungsordnung ein scharfes Bild im Auge 32. Gleichzeitig entsteht ebenfalls ein unscharfes und astigmatisches Bild durch die Strahlenverläufe S3 und S5 einer zweiten Beugungsordnung. Beim Blick auf ein nahes Objekt in bzw. auf der Objektabstandsfläche O2 entsteht durch den Strahlenverlauf S2, S6 einer ersten Beugungsordnung ein unscharfes astigmatisches Bild im Auge 82. Gleichzeitig entsteht ebenfalls ein zweites Bild, das ebenfalls unscharf ist durch den Strahlenverlauf S4 einer zweiten Beugungsordnung (vgl. Fig. 8B).

**Fig. 9** zeigt eine schematische Darstellung der Strahlenverläufe für zwei Beugungsordnungen für Hauptschnitte kleinster und größter Brechkraft beim Blick durch ein Gebiet einer ophthalmischen Linse 90, in welchem der ungewollte refraktive Astigmatismus beim Blick in die Nähe kompensiert wurde. **Fig. 9A** zeigt die Strahlverläufe beim Blick in die Ferne und **Fig. 9B** beim Blick in die Nähe.

Wie in Fig. 9A gezeigt, entsteht beim Blick auf ein fernes Objekt in der Objektabstandsfläche O1 durch den Strahlenverlauf S1, S5 einer ersten Beugungsordnung ein unscharfes astigmatisches Bild im Auge 32. Gleichzeitig entsteht ebenfalls ein zweites Bild, das ebenfalls unscharf ist durch den Strahlenverlauf S3 einer zweiten Beugungsordnung. Beim Blick auf ein nahes Objekt in der Objektabstandsfläche O2 entsteht durch den Strahlenverlauf S2 einer ersten Beugungsordnung ein scharfes Bild im Auge 32. Gleichzeitig entsteht ebenfalls ein unscharfes und astigmatisches Bild durch die Strahlenverläufe S4, S6 einer zweiten Beugungsordnung (vgl. Fig. 9B).

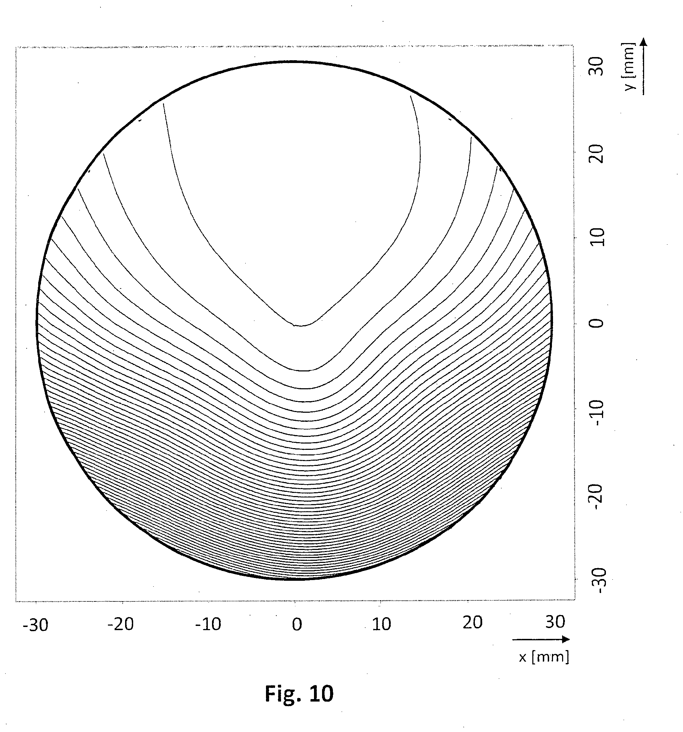

**Fig. 10** bis **14** zeigen beispielhafte progressive Brillengläser mit unterschiedlichen diffraktiven Gittern. Alle Brillengläser sind für die Refraktion Sph=0,5 dpt; Zyl=0 dpt und Add=2,5 dpt ausgelegt und weisen eine sphärische Vorderfläche mit einem refraktiven mittleren Flächenbrechwert von 6,25 dpt und die gleiche rein refraktive progressive Rückfläche auf.

**Fig. 10** zeigt ein beispielhaftes Gitter, das den Astigmatismus beim Blick in die Ferne zumindest teilweise kompensiert, wobei der Verlauf jedes 100. Gitterstreifens gezeigt wird. Das Gitter ist auf der sphärischen Vorderfläche des Brillenglases angeordnet. Die Beugungseffizienz in diesem Fall ist 1 bzw. 100%.

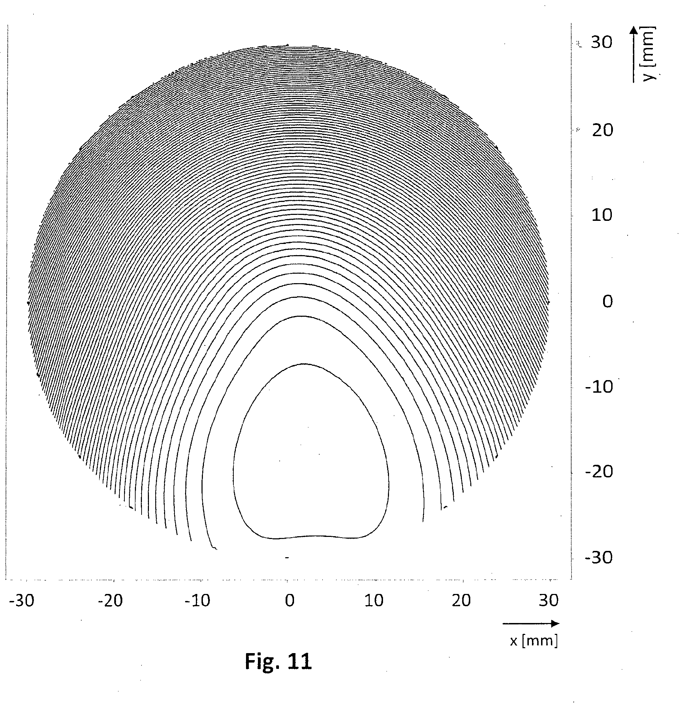

**Fig. 11** zeigt ein beispielhaftes Gitter, das den Astigmatismus beim Blick in die Nähe zumindest teilweise kompensiert, wobei der Verlauf jedes 100. Gitterstreifens gezeigt wird. Das Gitter ist auf der sphärischen Vorderfläche des Brillenglases angeordnet. Die Beugungseffizienz in diesem Fall ist 1 bzw. 100%.

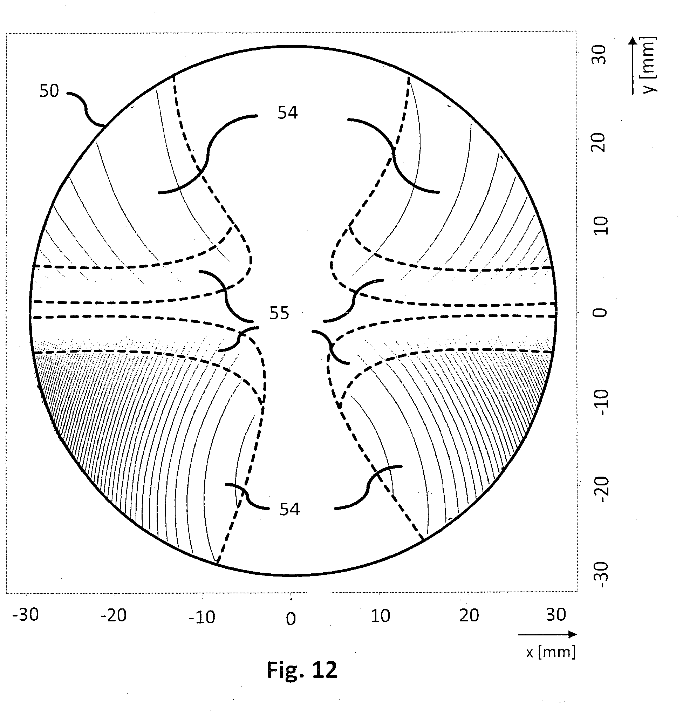

**Fig. 12** zeigt eine beispielhafte diffraktive Struktur, die den peripheren unerwünschten Astigmatismus im Fern- und Nahbereich zumindest teilweise kompensiert, wobei der Verlauf jedes 100. Gitterstreifens gezeigt wird. Die diffraktive Struktur ist auf der sphärischen Vorderfläche des Brillenglases angeordnet und weist zumindest eine Beugungsordnung mit variabler Beugungseffizienz auf, wobei die Variationen in der Beugungseffizienz durch die Variationen des Kontrasts der dargestellten Gitterstreifen dargestellt werden. In Fig. 12 wird die diffraktive Struktur mit eingezeichneten Gebiete gleichbleibender und sich ändernder Beugungseffizienz der diffraktiven Struktur dargestellt.

Die diffraktive Struktur umfasst vier Gebiete bzw. vier einzelne diffraktive Gitter, die jeweils links und rechts der Hauptblicklinie im oberen und unteren Teil der Linse angeordnet sind. Jedes diffraktive Gitter weist ein Gebiet gleichbleibender Beugungseffizienz 54 und ein Gebiet sich ändernder Beugungseffizienz 55 auf. Die Anordnung der Gebiete gleichbleibender Beugungseffizienz 54 und sich ändernder Beugungseffizienz 55 entspricht z.B. der in Fig. 5C, Mitte dargestellten Anordnung. Wird jeweils nur der obere Teil (y>0mm) bzw. untere Teil (y<0mm) der in Fig. 12 dargestellten diffraktiven Struktur verwendet, können diffraktive Strukturen realisiert werden, die den ungewollten peripheren Astigmatismus wenigstens teilweise im Fern- oder im Nahbereich kompensieren können (vgl. z.B. Fig. 5B Mitte bzw. 5A Mitte).

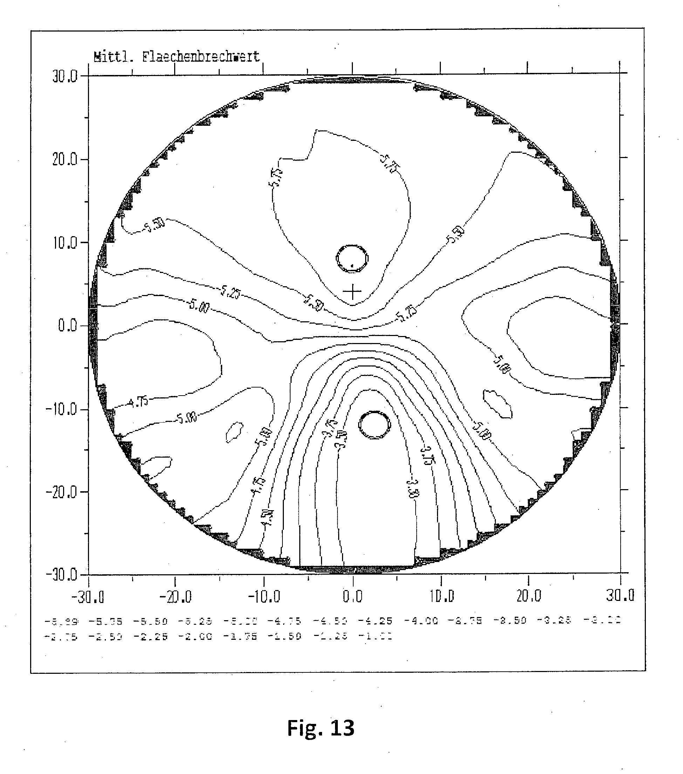

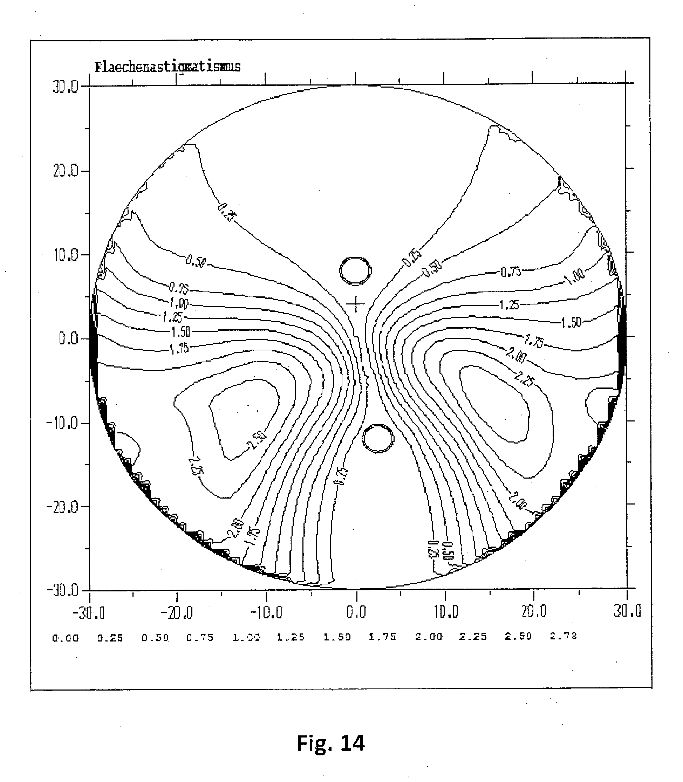

**Fig. 13** zeigt den Verlauf des mittleren Flächenbrechwerts der rein refraktiven Rückfläche des Brillenglases. **Fig. 14** zeigt den Verlauf des Flächenastigmatismus der refraktiven Rückfläche des Brillenglases. Der Abstand zwischen zwei benachbarten Isobrechwert- bzw. Isoastigmatismuslinien beträgt 0,25 dpt.

Ein weiteres bevorzugtes Beispiel der Erfindung betrifft eine ophthalmische Linse mit kontinuierlichem Brechwertübergang zwischen zwei Punkten, die mindestens eine diffraktive Struktur aufweist, dadurch gekennzeichnet, dass:

die peripher auftretenden ungewollten Astigmatismen des refraktiven Brechkraftanteils mit Hilfe des diffraktiven Brechkraftanteils zumindest teilweise kompensiert werden (z.B. unter 2,5, 2,0, 1,5, 1,0, 0,5, 0,3, 0,25 oder 0,2 dpt in mindestens einer Beugungsordnung);

es zwischen einem Fern- und einem Nahbezugspunkt der Linse mindestens eine Verbindungslinie gibt, entlang derer die Beugungseffizienz mindestens einer Beugungsordnung sich kontinuierlich ändert; und

es zwischen Fern- und Nahbezugspunkt mindestens eine Verbindungslinie gibt, entlang derer sich der refraktive Anteil der Brechkraft kontinuierlich ändert.

Zusätzlich oder alternativ zu den oben beschriebenen ophthalmischen Linsen mit diffraktiven Strukturen ist es möglich, die chromatische Aberration einer ophthalmischen Linse durch eine geeignete Kombination von refraktiven und diffraktiven Strukturen zu verringern. In einem Beispiel wird die diffraktive Struktur derart gestaltet, dass für wenigstens ein Gebiet von Durchblickstellen die chromatische Aberration der diffraktiven Struktur und die chromatische Aberration der refraktiven Flächen der ophthalmischen Linse sich wenigstens teilweise kompensieren.

Da durch Kombination von refraktiven und diffraktiven Strukturen eine vollständige Kompensation der chromatischen Aberration im Allgemeinen nicht gleichzeitig mit einer Kompensation astigmatischer Brechkraft der jeweiligen Strukturen erreicht werden kann, können beide Ziele gegeneinander abgewogen werden. Bei einer Optimierung einer ophthalmischen Linse mit refraktiven und diffraktiven Strukturen kann dies durch eine, z.B. aus der WO 2012/065737 bekannten Zielfunktion erfolgen:

$$F = \sum_{i,\lambda} g_Z(i,\lambda)(Z_\Delta(i,\lambda) - Z_{\Delta,\text{Soll}}(i,\lambda))^2 + g_S(i,\lambda)(S_\Delta(i,\lambda) - S_{\Delta,\text{Soll}}(i,\lambda))^2.$$

In dieser Formel ist $F$ die zu minimierende Zielfunktion, $S_\Delta$ und $Z_\Delta$ der Refraktionsfehler des sphärischen Äquivalents bzw. der Betrag der astigmatischen Abweichung, $S_{\Delta,\text{Soll}}$ und $Z_{\Delta,\text{Soll}}$ die entsprechenden Sollwerte und $g_Z(i,\lambda)$, $g_Z(i,\lambda)$ sind die entsprechenden Gewichte. Alle Abbildungseigenschaften werden bei einer bestimmten Wellenlänge ausgewertet, und die Summe über den Index $i$ läuft über verschiedene Bewertungsstellen bzw. Blickrichtungen der ophthalmischen Linse (z.B. ein Brillenglas), sowie über die Wellenlänge $\lambda$, wobei die Zielfunktion mindestens zwei verschiedene Werte für die Wellenlänge umfasst.

Freiheitsgrad der Optimierung ist außer einer Pfeilhöhe der brechenden Flächen ebenfalls eine Funktion, die die diffraktive Struktur beschreibt, beispielsweise die in WO 2012/065738 A1 eingeführte Phasenfunktion $\Psi(x, y)$.

Da bei einer Durchblickstelle mehrere Beugungsordnungen $v$ mit einer von Null unterschiedlichen Beugungseffizienz geben kann, werden in einem beispielhaften Optimierungsverfahren bei der Berechnung der Zielfunktion alle diese Beugungsordnungen einbezogen. Es werden ferner geeignete, von der Beugungsordnung abhängige Sollwerte und Gewichte bereitgestellt. Alle auszuwertenden optischen Eigenschaften der Linse (z.B. der Refraktionsfehler des sphärischen Äquivalents und den Betrag der astigmatischen Abweichung) werden für die jeweilige Beugungsordnung berechnet.

Eine im Hinblick auf die Beugungsordnungen erweiterte polychromatische Funktion kann z.B. die Funktion:

$$F = \sum_{i,\lambda,v} g_Z(i,\lambda,v)(Z_\Delta(i,\lambda,v) - Z_{\Delta,\text{Soll}}(i,\lambda,v))^2 + g_S(i,\lambda,v)(S_\Delta(i,\lambda,v) - S_{\Delta,\text{Soll}}(i,\lambda,v))^2$$

sein.

In der obigen Formel erfolgt die Summe nicht nur über alle Bewertungsstellen $i$ und Wellenlängen $\lambda$, sondern auch über alle Beugungsordnungen $v$.

Die Gewichte verschiedener Beugungsordnungen bei identischer Durchblickstelle bzw. Bewertungsstelle sowie identischer Wellenlänge können selbst als eine monoton steigende Funktion der Beugungseffizienz gewählt werden.

Die obige polychromatische Funktion kann um weitere optische Eigenschaften bzw. um weitere Abbildungsfehler ergänzt werden, wie z.B. die lokale prismatische Wirkung der Linse. Ebenfalls können anstelle des Refraktionsfehlers und der astigmatischen Abweichung andere Abbildungsfehler in die Zielfunktion einbezogen werden. Die polychromatische Funktion kann lediglich von einem gewichteten Term abhängen, z.B. von dem gewichteten Refraktionsfehler oder von der gewichteten astigmatischen Abweichung.

Wenn die ophthalmische Linse mit zumindest einer diffraktiven Struktur berechnet bzw. optimiert wird, werden die entsprechenden Flächendaten und Daten der diffraktiven Struktur bereitgestellt und eine ophthalmische Linse fertig gestellt. Die dazu erforderlichen Fertigungsverfahren und Bearbeitungsmaschinen sind aus dem Stand der Technik bekannt.

**Bezugszeichenliste**

10, 14 Bereiche unterschiedlicher Brechkraft
12 Bereich variabler Beugungseffizienz
16, 18 Referenzpunkte
20 Linie, welche die Referenzpunkte verbindet
30, 40, 42, 50, 60, 70, 80, 90: ophthalmische Linsen
32 Fovea des Auges
51 astigmatismusfreier Bereich
52 Bereich des peripheren, ungewollten Astigmatismus
53 Isoastigmatismuslinien

54, 55 Bereiche mit diffraktiven Strukturen

54 Bereich annähernd konstanter Beugungseffizienz

55 Bereich variabler Beugungseffizienz

56, 57, 58 Bereiche, die jeweils für das Sehen in die Ferne, Nähe und in mittlere Entfernungen ausgelegt sind

59 Bereiche mit ungenügend scharfer Abbildung

62, 64 Bereiche, in welchen der durch den refraktiven Brechwertverlauf verursachte refraktive ungewollte Astigmatismus wenigstens teilweise kompensiert wird

62 Bereich annähernd konstanter Beugungseffizienz

64 Bereich variabler Beugungseffizienz

66, 67, 68 Linien maximaler Beugungseffizienz einer Beugungsordnung

72, 74 Bereiche mit diffraktiven Strukturen

72 Bereich annähernd konstanter Beugungseffizienz

74 Bereich variabler Beugungseffizienz

82, 84 Bereiche in welchen der durch den refraktiven Brechwertverlauf verursachte refraktive ungewollte Astigmatismus wenigstens teilweise kompensiert wird;

82 Bereich annähernd konstanter Beugungseffizienz

84 Bereich variabler Beugungseffizienz

86, 87, 88 Linien maximaler Beugungseffizienz einer Beugungsordnung

76, 89 Ränder zwischen der diffraktiven Struktur und des refraktiven Teils, an welchen ein Angleich der prismatischen Wirkungen stattfindet

L1, L2, X00, X01, X02 Verlauf der Beugungseffizienz für zwei unterschiedliche Beugungsordnungen

O1,O2 Objektabstandsflächen

S1 bis S8 Strahlengänge durch die ophthalmische Linse

X1, X2, X3, X4, X12a, X12b, X12c, X23a, X23b, X23c Durchblickpunkte

## Patentansprüche

1. Progressive Brillenlinse (30; 40; 50; 60; 70; 80; 90) zur Presbyopiekorrektur, umfassend zumindest eine diffraktive Struktur, wobei die diffraktive Struktur

   zumindest einen Bereich (12; 55; 64; 74; 84) variabler Beugungseffizienz aufweist, in welchem die Beugungseffizienz zumindest einer, zur Brechkraft der Brillenlinse beitragenden Beugungsordnung der diffraktiven Struktur in Abhängigkeit von dem Durchblickpunkt auf der Brillenlinse variiert,
   wobei die zumindest eine, zur Brechkraft der Brillenlinse beitragende Beugungsordnung den unerwünschten Astigmatismus des refraktiven Teils der Brillenlinse zumindest teilweise kompensiert,
   wobei die Beugungseffizienz der zumindest einen Beugungsordnung der diffraktiven Struktur sich stetig entlang einer Linie (20) ändert, welche einen ersten Referenzpunkt (16) der Linse mit einem zweiten Referenzpunkt (18) der Brillenlinse verbindet,
   wobei der erste Referenzpunkt (16) ein Fernbezugspunkt ist, in welchem die Brechkraft der Linse einen zum Sehen in die Ferne oder in mittlere Entfernungen geeigneten Wert beträgt, und der zweite Referenzpunkt (18) ein Nahbezugspunkt ist, in welchem die Brechkraft der Linse einen zum Sehen in die Nähe geeigneten Wert beträgt;
   wobei im Bereich variabler Beugungseffizienz (12; 55; 64; 74; 84) die Beugungseffizienz zumindest einer zusätzlichen Beugungsordnung räumlich, in Abhängigkeit von dem Durchblickpunkt auf der Brillenlinse variiert;
   wobei die Beugungseffizienz einer ersten Beugungsordnung entlang der die Referenzpunkte verbindenden Linie (20) stetig abnimmt; und die Beugungseffizienz der zumindest einen zusätzlichen Beugungsordnung entlang der die Referenzpunkte verbindenden Linie (20) zunimmt;
   wobei die zumindest eine diffraktive Struktur an zumindest einen refraktiven Teil grenzt, und wobei die diffraktive Struktur und der refraktive Teil derart ausgelegt sind, dass an zumindest einem Teil der Grenze (76; 89) zwischen dem refraktiven Teil und der diffraktiven Struktur das Gesamtprisma der Brillenlinse keine Unstetigkeit aufweist.

2. Progressive Brillenlinse (30; 40; 50; 60; 70; 80; 90) nach Anspruch 1, wobei die Beugungseffizienz der ersten Beugungsordnung im ersten Referenzpunkt (16) einen Wert von im Wesentlichen 100% und im zweiten Referenzpunkt (18) einen Wert von im Wesentlichen 0% beträgt.

3. Progressive Brillenlinse (30; 40; 50; 60; 70; 80; 90) nach einem der vorangegangenen Ansprüche, wobei die diffraktive Struktur ferner

zumindest einen Bereich variabler diffraktiver Brechkraft (10; 14), in welchem die Brechkraft zumindest einer Beugungsordnung der diffraktiven Struktur variabel ist; und/oder

zumindest einen Bereich konstanter Beugungseffizienz (54; 62; 72; 82) aufweist, in welchem die Beugungseffizienz der zumindest einen Beugungsordnung der diffraktiven Struktur konstant ist aufweist.

4. Progressive Brillenlinse (30; 40; 50; 60; 70; 80; 90) nach einem der vorangegangenen Ansprüche, wobei die diffraktive Struktur derart ausgelegt ist, zumindest zwei, senkrecht zu einander stehenden Beugungsordnungen zu erzeugen und wobei die diffraktive Struktur ferner ausgelegt ist,

den Astigmatismus für eine Objektentfernung an einem Durchblickpunkt mittels der von der ersten Beugungsordnung erzeugten astigmatischen Wirkung ganz oder teilweise zu kompensieren; und den Astigmatismus für eine andere Objektentfernung im selben Durchblickpunkt mittels der von der zweiten Beugungsordnung erzeugten astigmatischen Wirkung ganz oder teilweise zu kompensieren.

5. Progressive Brillenlinse (30; 40; 50; 60; 70; 80; 90) nach einem der vorangegangenen Ansprüche, wobei die zumindest eine diffraktive Struktur außerhalb der Bereiche guter Sicht (51), in welchen der unerwünschte Astigmatismus des refraktiven Teils der ophthalmischen Linse kleiner als 0,5 dpt ist, angeordnet wird.

6. Progressive Brillenlinse (30; 40; 50; 60; 70; 80; 90) nach einem der vorangegangenen Ansprüche, wobei die diffraktive Struktur derart ausgelegt ist, die chromatischen Aberrationen des refraktiven Teils der Brillenlinse in zumindest einem Bereich der Linse zumindest teilweise zu kompensieren.

7. Verfahren zum Herstellen einer progressiven Brillenlinse (30; 40; 50; 60; 70; 80; 90) zur Presbyopiekorrektur nach einem der vorangegangenen Ansprüche, umfassend:

Vorgabe einer zu optimierenden progressiven Brillenlinse;
Optimieren der vorgegebenen Brillenlinse, derart, dass an zumindest einer Bewertungsstelle der Brillenlinse die Abweichung des Werts zumindest einer optischen Eigenschaft der Brillenlinse von einem Sollwert minimiert wird.

8. Verfahren nach Anspruch 7, wobei die zumindest eine optische Eigenschaft der Brillenlinse die chromatische Aberration, der Refraktionsfehler, die astigmatische Abweichung und/oder das Prisma der Brillenlinse ist.

9. Verfahren nach Anspruch 7 oder 8, wobei das Optimieren der vorgegebenen Brillenlinse ein Minimieren der Zielfunktion

$$F = \sum_{i,\lambda,v} g_Z(i,\lambda,v)(Z_\Delta(i,\lambda,v) - Z_{\Delta\,\mathrm{Soll}}(i,\lambda,v))^2 + g_S(i,\lambda,v)(S_\Delta(i,\lambda,v) - S_{\Delta\,\mathrm{Soll}}(i,\lambda,v))^2$$

umfasst, wobei

$S_\Delta(i, \lambda, v)$ den Refraktionsfehler des sphärischen Äquivalents an der i-ten Bewertungsstelle, für die Wellenlänge $\lambda$ und die Beugungsordnung v;
$S_{\Delta,Soll}(i, \lambda, v)$ den Sollwert des Refraktionsfehlers an der i-ten Bewertungsstelle, für die Wellenlänge $\lambda$ und die Beugungsordnung v;
$Z(i, \lambda, v)$ den Betrag der astigmatischen Abweichung an der i-ten Bewertungsstelle, für die Wellenlänge $\lambda$ und die Beugungsordnung v,
$Z_{\Delta,Soll}(i, \lambda, v)$ den Sollwert des Betrags der astigmatischen Abweichung an der i-ten Bewertungsstelle, für die Wellenlänge $\lambda$ und die Beugungsordnung v;
$g_S(i, \lambda, v)$ die Gewichtung des Refraktionsfehlers an der i-ten Bewertungsstelle, für die Wellenlänge $\lambda$ und die Beugungsordnung v;
$g_Z(i, \lambda, v)$ die Gewichtung des Betrags der astigmatischen Abweichung an der i-ten Bewertungsstelle, für die Wellenlänge $\lambda$ und die Beugungsordnung v
bezeichnen.

10. Verfahren nach Anspruch 9, wobei die Gewichtungen verschiedener Beugungsordnungen bei identischer Bewertungsstelle und bei identischer Wellenlänge eine monoton steigende Funktion der Beugungseffizienz sind.

**11.** Vorrichtung zum Herstellen einer progressiven Brillenlinse zur Presbyopiekorrektur (30; 40; 50; 60; 70; 80; 90) nach einem der Ansprüche 1 bis 6 umfassend:

Mittel zur Vorgabe einer zu optimierenden progressiven Brillenlinse;
Optimierungsmittel, welche ausgelegt sind, die zu optimierenden Brillenlinse derart zu optimieren, dass an zumindest einer Bewertungsstelle der Brillenlinse die Abweichung des Werts zumindest einer optischen Eigenschaft der Brillenlinse von einem Sollwert minimiert wird.

**Claims**

**1.** Progressive spectacle lens (30; 40; 50; 60; 70; 80; 90) for presbyopia correction, comprising at least one diffractive structure, wherein the diffractive structure

having at least one region (12; 55; 64; 74; 84) of variable diffraction efficiency, in which the diffraction efficiency of at least one diffraction order of the diffractive structure contributing to the refractive power of the spectacle lens varies as a function of the point of view on the spectacle lens,
wherein the at least one diffractive order contributing to the refractive power of the spectacle lens at least partially compensates for the undesired astigmatism of the refractive portion of the spectacle lens,
wherein the diffraction efficiency of the at least one diffractive order of the diffractive structure varies continuously along a line (20) connecting a first reference point (16) of the lens to a second reference point (18) of the spectacle lens,
wherein the first reference point (16) is a distance reference point at which the refractive power of the lens is a value suitable for distance or intermediate distance vision, and the second reference point (18) is a near reference point at which the refractive power of the lens is a value suitable for near vision;
wherein in the region of variable diffraction efficiency (12; 55; 64; 74; 84) the diffraction efficiency of at least one additional diffraction order varies spatially as a function of the viewing point on the spectacle lens;
wherein the diffraction efficiency of a first diffractive order steadily decreases along the line (20) connecting the reference points; and the diffraction efficiency of the at least one additional diffractive order increases along the line (20) connecting the reference points;
wherein the at least one diffractive structure is adjacent to at least one refractive portion, and wherein the diffractive structure and the refractive portion are configured such that at at least a portion of the boundary (76; 89) between the refractive portion and the diffractive structure, the overall prism of the spectacle lens has no discontinuity.

**2.** Progressive spectacle lens (30; 40; 50; 60; 70; 80; 90) according to claim 1, wherein the diffraction efficiency of the first diffraction order at the first reference point (16) is a value of substantially 100% and at the second reference point (8) is a value of substantially 0%.

**3.** Progressive spectacle lens (30; 40; 50; 60; 70; 80; 90) according to any one of the preceding claims, wherein the diffractive structure further comprises

at least one region of variable diffractive power (10; 14) in which the power of at least one diffraction order of the diffractive structure is variable; and/or
at least one region of constant diffractive efficiency (54; 62; 72; 82) in which the diffractive efficiency of the at least one diffractive order of the diffractive structure is constant.

**4.** Progressive spectacle lens (30; 40; 50; 60; 70; 80; 90) according to any one of the preceding claims, wherein the diffractive structure is adapted to generate at least two diffractive orders perpendicular to each other, and wherein the diffractive structure is further adapted to compensating all or part of the astigmatism for an object distance at a look-through point by means of the astigmatic effect generated by the first diffraction order; and
fully or partially compensating for astigmatism for a different object distance at the same viewing point by means of the astigmatic effect produced by the second diffraction order.

**5.** Progressive spectacle lens (30; 40; 50; 60; 70; 80; 90) according to any one of the preceding claims, wherein the at least one diffractive structure is arranged outside the areas of good vision (51) in which the undesired astigmatism of the refractive part of the ophthalmic lens is less than 0.5 dpt.

6.  Progressive spectacle lens (30; 40; 50; 60; 70; 80; 90) according to any one of the preceding claims, wherein the diffractive structure is designed to at least partially compensate the chromatic aberrations of the refractive part of the ophthalmic lens in at least one region of the lens.

7.  Method of manufacturing a progressive spectacle lens (30; 40; 50; 60; 70; 80; 90) for presbyopia correction according to one of the preceding claims, comprising:

Specifying an ophthalmic lens to be optimized;
Optimizing the predetermined lens such that the deviation of the value of at least one optical property of the ophthalmic lens from a target value is minimized at at least one evaluation point of the ophthalmic lens.

8.  Method according to claim 7, wherein the at least one optical property of the spectacle lens is the chromatic aberration, the refractive error, the astigmatic deviation and/or the prism of the spectacle lens.

9.  Method according to claim 7 or 8, wherein the optimizing of the given spectacle lens comprises minimizing the objective function

$$F = \sum_{i,\lambda,v} g_Z(i,\lambda,v)(Z_\Delta(i,\lambda,v) - Z_{\Delta,Soll}(i,\lambda,v))^2 + g_S(i,\lambda,v)(S_\Delta(i,\lambda,v) - S_{\Delta,Soll}(i,\lambda,v))^2$$

where

$S_\Delta(i, \lambda, v)$ denotes the refraction error of the spherical equivalent at the i-th evaluation point, for the wavelength $\lambda$ and the diffraction orders;
$S_{\Delta,Soll}(i, \lambda, v)$ denotes the nominal value of the refraction error at the i-th evaluation point, for the wavelength $\lambda$ and the diffraction order $v$;
$Z(i, \lambda, v)$ denotes the amount of astigmatic deviation at the i-th evaluation point, for the wavelength $\lambda$ and the diffraction order $v$,
$Z_{\Delta,Soll}(i, \lambda, v)$ denotes the nominal value of the amount of astigmatic deviation at the i-th evaluation point, for the wavelength $\lambda$ and the diffraction order $v$;
$g_S(i, \lambda, v)$ denotes the weighting of the refraction error at the i-th evaluation point, for the wavelength $\lambda$ and the diffraction order $v$;
$g_Z(i, \lambda, v)$ denotes the weighting of the amount of the astigmatic deviation at the i-th evaluation point, for the wavelength $\lambda$ and the diffraction order $v$.

10.  Method according to claim 9, wherein the weights of different diffraction orders at identical evaluation point and at identical wavelength are a monotonically increasing function of the diffraction efficiency.

11.  Apparatus for manufacturing an ophthalmic spectacle lens for presbyopia correction (30; 40; 50; 60; 70; 80; 90) according to any one of claims 1 to 6, comprising:

Means for presetting an ophthalmic lens to be optimized;
Optimization means which are designed to optimize the ophthalmic lens to be optimized in such a way that the deviation of the value of at least one optical property of the ophthalmic lens from a target value is minimized at at least one evaluation point of the ophthalmic lens.

**Revendications**

1.  Lentille ophtalmique progressive (30 ; 40 ; 50 ; 60 ; 70 ; 80 ; 90) pour la correction de la presbytie, comprenant au moins une structure diffractive, dans laquelle la structure diffractive comprend une zone de diffraction de longueur d'onde supérieure à la longueur d'onde de la lentille.

présente au moins une zone (12 ; 55 ; 64 ; 74 ; 84) d'efficacité de diffraction variable, dans laquelle l'efficacité de diffraction d'au moins un ordre de diffraction de la structure diffractive, contribuant à la puissance de réfraction de la lentille de lunettes, varie en fonction du point de vue sur la lentille de lunettes,
dans lequel ledit au moins un ordre de diffraction contribuant à la puissance de réfraction du verre de lunettes compense au moins partiellement l'astigmatisme indésirable de la partie réfractive du verre de lunettes,
dans lequel l'efficacité de diffraction dudit au moins un ordre de diffraction de la structure diffractive varie de manière continue le long d'une ligne (20) reliant un premier point de référence (16) de la lentille à un second point de référence (18) de la lentille ophtalmique,
le premier point de référence (16) étant un point de référence lointain dans lequel le pouvoir réfringent de la lentille est une valeur appropriée pour la vision à distance ou à moyenne distance, et le second point de référence (18) étant un point de référence proche dans lequel le pouvoir réfringent de la lentille est une valeur appropriée pour la vision de près ;
dans lequel, dans la zone d'efficacité de diffraction variable (12 ; 55 ; 64 ; 74 ; 84), l'efficacité de diffraction d'au moins un ordre de diffraction supplémentaire varie spatialement en fonction du point de vue sur la lentille ophtalmique ;
dans lequel l'efficacité de diffraction d'un premier ordre de diffraction diminue de manière continue le long de la ligne (20) reliant les points de référence ; et l'efficacité de diffraction dudit au moins un ordre de diffraction supplémentaire augmente le long de la ligne (20) reliant les points de référence ;
dans lequel ladite au moins une structure diffractive est adjacente à au moins une partie réfractive, et dans lequel la structure diffractive et la partie réfractive sont conçues de telle sorte qu'au niveau d'au moins une partie de la frontière (76 ; 89) entre la partie réfractive et la structure diffractive, le prisme global de la lentille ophtalmique ne présente pas de discontinuité.

2. Lentille ophtalmique progressive (30 ; 40 ; 50 ; 60 ; 70 ; 80 ; 90) selon la revendication 1, dans laquelle l'efficacité de diffraction du premier ordre de diffraction est une valeur sensiblement égale à 100% au premier point de référence (16) et une valeur sensiblement égale à 0% au deuxième point de référence (8).

3. Lentille ophtalmique progressive (30 ; 40 ; 50 ; 60 ; 70 ; 80 ; 90) selon l'une quelconque des revendications précédentes, dans laquelle la structure diffractive comprend en outre

au moins une zone de puissance diffractive variable (10 ; 14) dans laquelle la puissance d'au moins un ordre de diffraction de la structure diffractive est variable ; et/ou
au moins une zone d'efficacité de diffraction constante (54 ; 62 ; 72 ; 82), dans laquelle l'efficacité de diffraction d'au moins un ordre de diffraction de la structure diffractive est constante.

4. Lentille ophtalmique progressive (30 ; 40 ; 50 ; 60 ; 70 ; 80 ; 90) selon l'une quelconque des revendications précédentes, dans laquelle la structure diffractive est adaptée pour générer au moins deux ordres de diffraction perpendiculaires l'un à l'autre, et dans laquelle la structure diffractive est en outre adaptée pour compenser totalement ou partiellement l'astigmatisme pour une distance d'objet à un point de vue au moyen de l'effet astigmatique généré par le premier ordre de diffraction ; et pour compenser totalement ou partiellement l'astigmatisme pour une autre distance objet au même point de vision au moyen de l'effet astigmatique généré par le deuxième ordre de diffraction.

5. Lentille ophtalmique progressive (30 ; 40 ; 50 ; 60 ; 70 ; 80 ; 90) selon l'une quelconque des revendications précédentes, dans laquelle ladite au moins une structure diffractive est placée en dehors des zones de bonne vision (51) dans lesquelles l'astigmatisme indésirable de la partie réfractive de la lentille ophtalmique est inférieur à 0,5 dpt.

6. Lentille ophtalmique progressive (30 ; 40 ; 50 ; 60 ; 70 ; 80 ; 90) selon l'une quelconque des revendications précédentes, dans laquelle la structure diffractive est adaptée pour compenser au moins partiellement les aberrations chromatiques de la partie réfractive de la lentille ophtalmique dans au moins une zone de la lentille.

7. Procédé de fabrication d'une lentille ophtalmique progressive (30 ; 40 ; 50 ; 60 ; 70 ; 80 ; 90) pour la correction de la presbytie selon l'une des revendications précédentes, comprenant :

Définition d'une lentille ophtalmique à optimiser ;
Optimiser la lentille prédéterminée de manière à minimiser, en au moins un point d'évaluation de la lentille ophtalmique, l'écart de la valeur d'au moins une propriété optique de la lentille ophtalmique par rapport à une valeur de consigne.

8. Procédé selon la revendication 7, dans lequel ladite au moins une propriété optique de la lentille ophtalmique est l'aberration chromatique, l'erreur de réfraction, la déviation astigmatique et/ou le prisme de la lentille ophtalmique.

9. Procédé selon la revendication 7 ou 8, dans lequel l'optimisation de la lentille ophtalmique donnée consiste à minimiser la fonction cible

$$F = \sum_{i,\lambda,v} g_Z(i,\lambda,v)(Z_\Delta(i,\lambda,v) - Z_{\Delta,Soll}(i,\lambda,v))^2 + g_S(i,\lambda,v)(S_\Delta(i,\lambda,v) - S_{\Delta,Soll}(i,\lambda,v))^2$$

où

$S_\Delta(i, \lambda, v)$ désigne l'erreur de réfraction de l'équivalent sphérique au ième point d'évaluation, pour la longueur d'onde $\lambda$ et l'ordre de diffraction $v$;

$S_{\Delta,Soll}(i, \lambda, v)$ désigne la valeur théorique de l'erreur de réfraction au ième point d'évaluation, pour la longueur d'onde $\lambda$ et l'ordre de diffraction $v$;

$Z(i, \lambda, v)$ désigne la valeur de l'écart astigmatique au ième point d'évaluation, pour la longueur d'onde $\lambda$ et l'ordre de diffraction $v$,

$Z_{\Delta,Soll}(i, \lambda, v)$ désigne la valeur cible de la quantité de déviation astigmatique au ième point d'évaluation, pour la longueur d'onde $\lambda$ et l'ordre de diffraction $v$,

$g_S(i, \lambda, v)$ désigne la pondération de l'erreur de réfraction au ième point d'évaluation, pour la longueur d'onde $\lambda$ et l'ordre de diffraction $v$;

$g_Z(i, \lambda, v)$ désigne la pondération de la valeur de l'écart astigmatique au ième point d'évaluation, pour la longueur d'onde $\lambda$ et l'ordre de diffraction $v$.

10. Procédé selon la revendication 9, dans lequel les pondérations de différents ordres de diffraction pour un site d'évaluation identique et pour une longueur d'onde identique sont une fonction monotone croissante de l'efficacité de diffraction.

11. Dispositif de fabrication d'une lentille ophtalmique de correction de la presbytie (30 ; 40 ; 50 ; 60 ; 70 ; 80 ; 90) selon l'une quelconque des revendications 1 à 6, comprenant :

des moyens de prédétermination d'une lentille ophtalmique à optimiser ;
des moyens d'optimisation, qui sont conçus pour optimiser la lentille ophtalmique à optimiser de telle sorte qu'en au moins un point d'évaluation de la lentille ophtalmique, l'écart de la valeur d'au moins une propriété optique de la lentille ophtalmique par rapport à une valeur de consigne est minimisé.

Fig. 2

Fig. 1

**Fig. 3A**

**Fig. 3B**

**Fig. 3C**

**Fig. 4A**

**Fig. 4B**

Fig. 5A

Fig. 5B

Fig. 5C

EP 3 123 238 B1

Fig. 6A

Fig. 6B

Fig. 6C

Fig. 7C

Fig. 7D

Fig. 7A

Fig. 7B

35

Fig. 8A

Fig. 8B

EP 3 123 238 B1

Fig. 9A

Fig. 9B

**Fig. 10**

Fig. 11

**Fig. 12**

**Fig. 13**

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0967509 B1
- EP 2175306 B1
- EP 2175307 A1
- EP 2649487 B1
- EP 2171526 A4
- US 20080273169 A
- US 7037906 B1
- WO 2011075668 A1
- JP 2009069462 A
- WO 2012065738 A
- EP 2011005782 A
- DE 102010051
- WO 2012065737 A1
- WO 2012065738 A1
- WO 2012065737 A